(19)

Europäisches Patentamt
European Patent Office
Office européen des brevets

(11) **EP 4 459 355 A2**

(12) **EUROPEAN PATENT APPLICATION**

(43) Date of publication:
**06.11.2024 Bulletin 2024/45**

(21) Application number: **24197493.0**

(22) Date of filing: **30.08.2024**

(51) International Patent Classification (IPC):
***G02B 13/00*** (2006.01)

(52) Cooperative Patent Classification (CPC):
**G02B 13/0045;** G02B 9/64

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.08.2023 CN 202311119628**

(71) Applicant: **Jiangxi OFILM Optical Co. Ltd.**
**Nanchang, Jiangxi 330096 (CN)**

(72) Inventors:
• LIU, Binbin
 **Shenzhen, 518106 (CN)**
• YIN, Jia
 **Nanchang, 330096 (CN)**

(74) Representative: **Zaboliene, Reda**
**Metida**
**Business center Vertas**
**Gyneju str. 16**
**01109 Vilnius (LT)**

(54) **OPTICAL SYSTEM, CAMERA MODULE, AND ELECTRONIC DEVICE**

(57) An optical system, a camera module, and an electronic device are provided. The optical system consists of seven lenses, that is, a first lens, a fourth lens, a sixth lens which have positive refractive power, and a second lens, a third lens, a fifth lens, and a seventh lens which have negative refractive power. The Object side surfaces of the first, second, third, fifth, sixth, and seventh lenses and the image side surface of the fourth lens are all convex near the optical axis. The image side surfaces of the first, second, third, fifth, sixth, and seventh lenses are all concave near the optical axis. Through the above design of each lens of the optical system, the optical system may meet requirement of miniaturization, and may have good imaging performance and variable aperture.

FIG. 1A

EP 4 459 355 A2

**Description**

FIELD

The subject matter relates to field of optical imaging, and more particularly, to an optical system, a camera module, and an electronic device.

BACKGROUND

Electronic devices, such as smartphones, digital cameras, laptops, tablet computers, and other portable terminals have rapidly developed in recent years. The electronic devices are equipped with cameras, and users have increasingly high requirements for the imaging quality of the cameras. In order to provide the users with better photography experience and enable the optical system to capture images in different scenes or according to different requirements, the optical system should have variable aperture and good imaging performance.

However, the variable aperture and the combination of multiple lenses may increase the volume of the optical system, making the camera difficult to meet the trend of miniaturization.

SUMMARY

The present application provides an optical system, a camera module, and an electronic device.

In a first aspect, the present application provides an optical system. The optical system consists of seven lenses having refractive power. From an object side to an image side along an optical axis of the optical system, the seven lenses sequentially include a first lens, a second lens, a third lens, a fourth lens, a fifth lens, a sixth lens, and a seventh lens. The first lens has positive refractive power, an object side surface of the first lens is convex near the optical axis, and an image side surface of the first lens is concave near the optical axis. The second lens has negative refractive power, an object side surface of the second lens is convex near the optical axis, and an image side surface of the second lens is concave near the optical axis. The third lens has negative refractive power, an object side surface of the third lens is convex near the optical axis, and an image side surface of the third lens is concave near the optical axis. The fourth lens has positive refractive power, and an image side surface of the fourth lens is convex near the optical axis. The fifth lens has negative refractive power, an object side surface of the fifth lens is convex near the optical axis, and an image side surface of the fifth lens is concave near the optical axis. The sixth lens has positive refractive power, an object side surface of the sixth lens is convex near the optical axis, and an image side surface of the sixth lens is concave near the optical axis. The seventh lens has negative refractive power, an object side surface of the seventh lens is convex near the optical axis, and an image side surface of the seventh lens is concave near the optical axis. The optical system further includes an aperture located on the object side of the first lens, and a size of the aperture is variable. The optical system satisfies relationships of $1.2 < TTL/ImgH < 1.55$, and $77\deg < FOV < 86\deg$.

By setting the first lens to have positive refractive power, the object side surface of the first lens to be convex near the optical axis, and the image side surface of the first lens to be concave near the optical axis, an incident angle of rays at the object side surface of the first lens may be reduced, and the field of view of the optical system may be increased. Furthermore, and rapid convergence of the rays may be avoided when the rays exit the first lens, and the optical system may gently transmit the rays to realize miniaturization of the optical system. By setting the second lens to have negative refractive power, the object side surface of the second lens to be convex near the optical axis, and the image side surface of the second lens to be concave near the optical axis, aberration generated by the first lens may be corrected, and the imaging quality maybe improved. By setting the third lens to have negative refractive power, the object side surface of the third lens to be convex near the optical axis, and the image side surface of the third lens to be concave near the optical axis, the rays may be smoothly transmitted, aberrations may be gradually eliminated, and excessive bending or curvature of the second lens may be avoided. By setting the fourth lens to have positive refractive power and the image side of the fourth lens to be convex near the optical axis, distortion, spherical aberration, and astigmatism caused by the lenses located on the object side of the fourth lens may be corrected, and the incident angle of the gradually diffused rays at the fourth lens may be reduced to improve the transmittance of the rays. The above settings may allow the first to fourth lenses to form a double Gaussian structure, and the workload of the fifth to seventh lenses may be reduced, thereby avoiding excessive curvature of the surface shape and improving the molding quality of the lenses. The fifth lens, the sixth lens, and the seventh lens respectively have negative, positive, and negative refractive power, and such distribution of refractive power cooperate with the surface design that the object side surfaces of the fifth to seventh lenses at the optical axis being convex and the image side surfaces of the fifth to seventh lenses at the optical axis being concave, longitudinal chromatic aberration may be eliminated and the focal length along the optical axis may be shortened, thereby improving the imaging quality and achieving miniaturization. The object side surface and image side surface of the seventh lens have at least one inflection point, which may correct off-axis aberration and suppress the incident angle of the rays on the imaging plane, thereby improving the imaging quality and relative illumination.

By setting the optical system to satisfy the relationship of 1.2<TTL/ImgH<1.55, the ratio of the distance from the object side surface of the first lens to the imaging plane of the optical system along the optical axis to half of the image height corresponding to the maximum field of view of the optical system is controlled, which may improve the resolution of the optical system in the full field and enhance the imaging quality of the marginal field. At the same time, the optical system may have a smaller total optical length and achieve miniaturization.

By setting the optical system to satisfy the relationship of 77deg<FOV<86 deg, the maximum field of view of the optical system is controlled, which may avoid excessive aberration, such that the optical system may achieve miniaturization while obtaining a sufficient field of view.

In a second aspect, the present application provides a camera module. The camera module includes an image sensor and the optical system mentioned in the first aspect. The image sensor is located on the image side of the optical system. A photosensitive surface of the image sensor is located at the imaging plane of the optical system. The rays travelling through the lenses and incident on the photosensitive surface may be converted into electrical signals corresponding to the images. The image sensor may be a complementary metal oxide semiconductor (CMOS) or a charge coupled device (CCD). The camera module may be an imaging module integrated into an electronic device or an independent lens. By incorporating the optical system of the present application into the camera module, the surface shape and refractive power of each lens of the optical system are reasonably controlled, such that the optical system may meet requirement of miniaturization, and may have good imaging performance and variable aperture.

In a third aspect, the present application provides an electronic device. The electronic device includes a housing and the camera module mentioned in the second aspect. The camera module is located in the housing. The electronic device may be, but not limited to a smartphone, a computer, or a smartwatch. By incorporating the camera module of the present application into the electronic device, the electronic device may meet requirement of miniaturization, and may have good imaging performance and variable aperture.

BRIEF DESCRIPTION OF THE DRAWINGS

Implementations of the present technology will now be described, by way of embodiment, with reference to the attached figures. Obviously, the drawings are only some embodiments of the present disclosure. For those ordinary skill in the art, other drawings can be obtained based on these drawings without creative work.

FIG. 1A is a schematic diagram of an optical system in a first aperture state according to a first embodiment of the present application;

FIG. 1B shows a longitudinal spherical aberration diagram, an astigmatism diagram, and a distortion diagram of the optical system of FIG. 1A;

FIG. 1C is a schematic diagram of an optical system in a second aperture state according to the first embodiment of the present application;

FIG. 1D shows a longitudinal spherical aberration diagram, an astigmatism diagram, and a distortion diagram of the optical system of FIG. 1D;

FIG. 1E is a schematic diagram of an optical system in a third aperture state according to the first embodiment of the present application;

FIG. 1F shows a longitudinal spherical aberration diagram, an astigmatism diagram, and a distortion diagram of the optical system of FIG. 1E;

FIG. 2A is a schematic diagram of an optical system in a first aperture state according to a second embodiment of the present application;

FIG. 2B shows a longitudinal spherical aberration diagram, an astigmatism diagram, and a distortion diagram of the optical system of FIG. 2A;

FIG. 2C shows a longitudinal spherical aberration diagram, an astigmatism diagram, and a distortion diagram of the optical system in a second aperture state according to the second embodiment of the present application;

FIG. 2D shows a longitudinal spherical aberration diagram, an astigmatism diagram, and a distortion diagram of the optical system in a third aperture state according to the second embodiment of the present application;

FIG. 3A is a schematic diagram of an optical system in a first aperture state according to a third embodiment of the present application;

FIG. 3B shows a longitudinal spherical aberration diagram, an astigmatism diagram, and a distortion diagram of the optical system of FIG. 3A;

FIG. 3C shows a longitudinal spherical aberration diagram, an astigmatism diagram, and a distortion diagram of the optical system in a second aperture state according to the third embodiment of the present application;

FIG. 3D shows a longitudinal spherical aberration diagram, an astigmatism diagram, and a distortion diagram of the optical system in a third aperture state according to the third embodiment of the present application;

FIG. 4A is a schematic diagram of an optical system in a first aperture state according to a fourth embodiment of the present application;

FIG. 4B shows a longitudinal spherical aberration diagram, an astigmatism diagram, and a distortion diagram of the optical system of FIG. 4A;

FIG. 4C shows a longitudinal spherical aberration diagram, an astigmatism diagram, and a distortion diagram of the optical system in a second aperture state according to the fourth embodiment of the present application;

FIG. 4D shows a longitudinal spherical aberration diagram, an astigmatism diagram, and a distortion diagram of the optical system in a third aperture state according to the fourth embodiment of the present application;

FIG. 5A is a schematic diagram of an optical system in a first aperture state according to a fifth embodiment of the present application;

FIG. 5B shows a longitudinal spherical aberration diagram, an astigmatism diagram, and a distortion diagram of the optical system of FIG. 5A;

FIG. 5C shows a longitudinal spherical aberration diagram, an astigmatism diagram, and a distortion diagram of the optical system in a second aperture state according to the fifth embodiment of the present application;

FIG. 5D shows a longitudinal spherical aberration diagram, an astigmatism diagram, and a distortion diagram of the optical system in a third aperture state according to the fifth embodiment of the present application;

FIG. 6 is a schematic diagram of a camera module according to an embodiment of the present application;

FIG. 7 is a schematic diagram of an electronic device according to an embodiment of the present application.

## DETAILED DESCRIPTION

Implementations of the present disclosure will now be described, by way of embodiments, with reference to the above figures. The embodiments are obviously a portion but not all of the embodiments of the present application. Based on the embodiments of the present application, other embodiments obtained by ordinary skill in the art without creative work will still fall within the scope of protection of the present application.

In a first aspect, the present application provides an optical system. The optical system consists of seven lenses with refractive power. From an object side to an image side along an optical axis of the optical system, the seven lenses sequentially include a first lens, a second lens, a third lens, a fourth lens, a fifth lens, a sixth lens, and a seventh lens. The first lens has positive refractive power, an object side surface of the first lens is convex near the optical axis, and an image side surface of the first lens is concave near the optical axis. The second lens has negative refractive power, an object side surface of the second lens is convex near the optical axis, and an image side surface of the second lens is concave near the optical axis. The third lens has negative refractive power, an object side surface of the third lens is convex near the optical axis, and an image side surface of the third lens is concave near the optical axis. The fourth lens has positive refractive power, and an image side surface of the fourth lens is convex near the optical axis. The fifth lens has negative refractive power, an object side surface of the fifth lens is convex near the optical axis, and an image side surface of the fifth lens is concave near the optical axis. The sixth lens has positive refractive power, an object side surface of the sixth lens is convex near the optical axis, and an image side surface of the sixth lens is concave near the optical axis. The seventh lens has negative refractive power, an object side surface of the seventh lens is convex near the optical axis, and an image side surface of the seventh lens is concave near the optical axis. The optical system further includes an aperture located on the object side of the first lens, and the size of the aperture may be changed.

The optical system satisfies the relationship of 1.2<TTL/ImgH<1.55. The optical system may further satisfy the relationship of 1.3<TTL/ImgH<1.5. Wherein, TTL is a distance from the object side surface of the first lens to the imaging plane of the optical system along the optical axis, and ImgH is half of an image height corresponding to a maximum field of view of the optical system.

The optical system further satisfies the relationship of 77deg<FOV<86deg. The optical system may further satisfy the relationship of 79deg<FOV<84deg. Wherein, FOV is the maximum field of view of the optical system.

By setting the first lens to have positive refractive power, the object side surface of the first lens to be convex near the optical axis, and the image side surface of the first lens to be concave near the optical axis, an incident angle of rays at the object side surface of the first lens may be reduced, and the field of view of the optical system may be increased. Furthermore, and rapid convergence of the rays may be avoided when the rays exit the first lens, and the optical system may gently transmit the rays to realize miniaturization of the optical system. By setting the second lens to have negative refractive power, the object side surface of the second lens to be convex near the optical axis, and the image side surface of the second lens to be concave near the optical axis, aberration generated by the first lens may be corrected, and the imaging quality maybe improved. By setting the third lens to have negative refractive power, the object side surface of the third lens to be convex near the optical axis, and the image side surface of the third lens to be concave near the optical axis, the rays may be smoothly transmitted, aberrations may be gradually eliminated, and excessive bending or curvature of the second lens may be avoided. By setting the fourth lens to have positive refractive power and the image side surface of the fourth lens to be convex near the optical axis, distortion, spherical aberration, and astigmatism caused by the lenses located at the object side of the fourth lens may be corrected, and the incident angle of the gradually diffused rays at the fourth lens may be reduced to improve the transmittance of the rays. The above settings may allow the first to fourth lenses to form a double Gaussian structure, and the workload of the fifth to seventh lenses may be reduced, thereby avoiding excessive curvature of the surface shape and improving the molding quality of the lenses. The fifth lens, the sixth lens, and the seventh lens respectively have negative, positive, and negative refractive power, and such distribution of refractive power cooperate with the surface design that the object side surfaces of the fifth to seventh lenses at the optical axis being convex and the image side surfaces of the fifth to seventh lenses at the optical axis being concave, longitudinal chromatic aberration may be eliminated and the focal length along the optical axis may be shortened, thereby improving the imaging quality and achieving miniaturization. The object side surface and image side surface of the seventh lens have at least one inflection point, which may correct off-axis aberration and suppress the incident angle of the rays on the imaging plane, thereby improving the imaging quality and relative illumination.

By setting the optical system to satisfy the relationship of 1.2<TTL/ImgH<1.55, the ratio of the distance from the object side surface of the first lens to the imaging plane of the optical system along the optical axis to half of the image height corresponding to the maximum field of view of the optical system is controlled, which may improve the resolution of the optical system in the full field and enhance the imaging quality of the marginal field. At the same time, the optical system may have a smaller total optical length and achieve miniaturization.

By setting the optical system to satisfy the relationship of 77deg<FOV<86 deg, the maximum field of view of the optical system is controlled, which may avoid excessive aberration, such that the optical system may achieve miniaturization while obtaining a sufficient field of view.

In at least one embodiment, the optical system satisfies the relationship of 0.9<f1/f<1.5. The optical system may further satisfy the relationship of 1<f1/f<1.4. Wherein, f1 is an effective focal length of the first lens, and f is an effective focal length of the optical system. The above relationship may allow the first lens to have proper refractive power in the optical system and the surface design of the first lens to be simple and flexible, such that the first lens may support a larger field of view and a large aperture. At the same time, the above relationship may further facilitate the converge of the rays incident from the first lens to the optical system, reduce the incidence angle of the rays, reduce the aberration, and simplify the balance between the overall aberration correction and the imaging quality of the optical system.

In at least one embodiment, the optical system satisfies the relationship of -4.5<f2/f<-2.5. The optical system may further satisfy the relationship of -4<f2/f<-3. Wherein, f2 is an effective focal length of the second lens. The above relationship may allow the second lens to have proper refractive power in the optical system and the surface design of the second lens to be simple and flexible. The above relationship may further reduce aberration and simplify the balance between the overall aberration correction and the imaging quality of the optical system.

In at least one embodiment, the optical system satisfies the relationship of f3/f<-4. The optical system may further satisfy the relationship of -10<f3/f<-5. Wherein f3 is an effective focal length of the third lens. The above relationship may allow the third lens to have proper refractive power in the optical system and the surface design of the third lens to be simple and flexible. The above relationship may further reduce aberration and simplify the balance between the overall aberration correction and the imaging quality of the optical system.

In at least one embodiment, the optical system satisfies the relationship of 1.5<f4/f<4. Furthermore, the optical system may further satisfy the relationship of 2<f4/f<3.5. Wherein f4 is an effective focal length of the fourth lens. The above relationship may allow the fourth lens to cooperate with the above three lenses to form a double Gaussian structure, which may eliminate aberration and allow the rays to gently travel toward the subsequent lenses.

In at least one embodiment, the optical system satisfies the relationship of -3<f5/f<-1. The optical system may further satisfy the relationship of -2.5<f5/f<-1.5. Wherein f5 is an effective focal length of the fifth lens. The above relationship may allow the fifth lens to gently diffuse the rays, which forms basis for subsequent imaging on large imaging plane.

In at least one embodiment, the optical system satisfies the relationship of 0.4<f6/f<1.2. The optical system may further satisfy the relationship of 0.6<f6/f<1. Wherein, f6 is an effective focal length of the sixth lens. The above relationship may allow the sixth lens to balance the aberrations of the lenses in front of the sixth lens and improve the imaging quality.

In at least one embodiment, the optical system satisfies the relationship of -1.2<f7/f<-0.45. The optical system may further satisfy the relationship of -1<f7/f<-0.6. Wherein, f7 is an effective focal length of the seventh lens. The above relationship may allow the seventh lens to cooperate with the lenses in front of the seventh lens to shorten the back focal length, thereby achieving miniaturization of the optical system.

Rxy is defined as a radius of curvature of one lens at the optical axis, wherein x is an integer from 1 to 7, and y is 1 or 2. Rx1 is the radius of curvature of the object side surface of the xth lens at the optical axis, and Rx2 is the radius of curvature of the image side surface of the xth lens at the optical axis. For example, R11 is the radius of curvature of the object side surface of the first lens at the optical axis, and R12 is the radius of curvature of the image side surface of the first lens at the optical axis.

In at least one embodiment, the optical system satisfies the relationship of 0.3<R11/f<0.7. The optical system may further satisfy the relationship of 0.4<R11/f<0.6. In at least one embodiment, the optical system satisfies the relationship of 1.3<R12/f<2.2. The optical system may further satisfy the relationship of 1.5<R12/f<2. Any above relationship may allow the first lens to maintain reasonable astigmatism, thereby improving the imaging quality of the optical system.

In at least one embodiment, the optical system satisfies the relationship of 0.5<R21/f<1.8. The optical system may further satisfy the relationship of 0.7<R21/f<1.6. In at least one embodiment, the optical system satisfies the relationship of 0.5<R22/f<1. The optical system may further satisfy the relationship of 0.6<R22/f<0.9. Any above relationships may allow the second lens to maintain reasonable astigmatism and further balance the astigmatism generated by the first lens, thereby improving the imaging quality of the optical system.

In at least one embodiment, the optical system satisfies the relationship of 1.2<R31/f<2.4. The optical system may further satisfy the relationship of 1.4<R31/f<2.2. In at least one embodiment, the optical system satisfies the relationship of 0.9<R32/f<1.7. The optical system may further satisfy the relationship of 1.1<R32/f<1.5. Any above relationship may allow the third lens to maintain reasonable astigmatism and further balance the astigmatism generated by the first and second lenses, thereby improving the imaging quality of the optical system.

In at least one embodiment, the optical system satisfies the relationship of 2.5<R41/f. The optical system may further satisfy the relationship of 3.5<R41/f<8. In at least one embodiment, the optical system satisfies the relationship of -4<R42/f<-1. The optical system may further satisfy the relationship of -3<R42/f<-1.25. Any above relationship may allow the fourth lens to have reasonable surface shape and to operate with the first to third lenses to form a double Gaussian structure, thereby improving the imaging quality of the optical system.

In at least one embodiment, the optical system satisfies the relationship of 0.9<R51/f<1.6. The optical system may further satisfy the relationship of 1<R51/f<1.5. In at least one embodiment, the optical system satisfies the relationship of 0.4<R52/f<0.8. The optical system may further satisfy the relationship of 0.5<R52/f<0.7. Any above relationship may allow the fifth lens to have reasonable refractive power other than strong refractive power, such that the fifth lens may gently receive the rays from the object side, thereby improving the imaging quality of the optical system.

In at least one embodiment, the optical system satisfies the relationship of 0.25<R61/f<0.5. The optical system may further satisfy the relationship of 0.3<R61/f<0.45. In at least one embodiment, the optical system satisfies the relationship of 1<R62/f<2.2. The optical system may further satisfy the relationship of 1.25<R62/f<2. Any above relationship may allow the sixth lens to maintain reasonable surface shape. Thus, balance may be obtained between the overall performance of the sixth lens and the seventh lens, and the surface shape of the sixth lens may match the seventh lens to correct aberration, thereby improving the imaging quality of the optical system.

In at least one embodiment, the optical system satisfies the relationship of 1.4<R71/f. The optical system may further satisfy the relationship of 1.6<R71/f<7. In at least one embodiment, the optical system satisfies the relationship of 0.2<R72/f<0.6. The optical system may further satisfy the relationship of 0.3<R72/f<0.5. Any above relationship may allow the seventh lens to maintain reasonable surface shape. Thus, balance may be obtained between the overall performance of the sixth lens and the seventh lens, and the surface shape of the seventh lens may match the sixth lens to correct aberration, thereby improving the imaging quality of the optical system.

In at least one embodiment, the optical system satisfies the relationship of 0<R11/R12<0.4. The optical system may further satisfy the relationship of 0.2<R11/R12<0.35. The above relationship reasonably controls the ratio of the radius of curvature of the object side surface of the first lens at the optical axis to the radius of curvature of the image side surface of the first lens at the optical axis. Thus, the refractive power of the first lens is controlled to be within a reasonable range, which may control the generation and correction of aberration.

In at least one embodiment, the optical system satisfies the relationship of 1<R21/R22<2. The optical system may further satisfy the relationship of 1.2<R21/R22<1.8. The above relationship reasonably controls the ratio of the radius of curvature of the object side surface of the second lens at the optical axis to the radius of curvature of the image side surface of the second lens at the optical axis. Thus, the refractive power of the second lens is controlled to be within a reasonable range, which may control the generation and correction of aberration.

In at least one embodiment, the optical system satisfies the relationship of 1<R31/R32<1.9. The optical system may further satisfy the relationship of 1.1<R31/R32<1.7. The above relationship reasonably controls the ratio of the radius of curvature of the object side surface of the third lens at the optical axis to the radius of curvature of the image side surface of the third lens at the optical axis. Thus, the refractive power of the third lens is controlled to be within a reasonable range, which may control the generation and correction of aberration.

In at least one embodiment, the optical system satisfies the relationship of R41/R42<-1.4. The optical system may further satisfy the relationship of -6<R41/R42<-1.5. The above relationship reasonably controls the ratio of the radius of curvature of the object side surface of the fourth lens at the optical axis to the radius of curvature of the image side surface of the fourth lens at the optical axis. Thus, the refractive power of the fourth lens is controlled to be within a reasonable range, which may control the generation and correction of aberration.

In at least one embodiment, the optical system satisfies the relationship of 1.5<R51/R52<2.6. The optical system may further satisfy the relationship of 1.7<R51/R52<2.4. The above relationship reasonably controls the ratio of the radius of curvature of the object side surface of the fifth lens at the optical axis to the radius of curvature of the image side surface of the fifth lens at the optical axis. Thus, the refractive power of the fifth lens is controlled to be within a reasonable range, which may control the generation and correction of aberration.

In at least one embodiment, the optical system satisfies the relationship of 0<R61/R62<0.35. The optical system may further satisfy the relationship of 0.15<R61/R62<0.3. The above relationship is beneficial for obtaining a reasonable configuration of the ratio between the radius of curvature of the object side surface of the sixth lens at the optical axis to the radius of curvature of the image side surface of the sixth lens at the optical axis. Thus, the refractive power of the six lens is controlled to be within a reasonable range, which may control the generation and correction of aberration.

In at least one embodiment, the optical system satisfies the relationship of 3<R71/R72. The optical system may further satisfy the relationship of 4<R71/R72<17. The above relationship reasonably controls the ratio of the radius of curvature of the object side surface of the seventh lens at the optical axis to the radius of curvature of the image side surface of the seventh lens at the optical axis, such that a difference between the radius of curvature of the object side surface of the seventh lens and the radius of curvature of the image side surface of the seventh lens is reasonable. Thus, the refractive power of the seventh lens is controlled to be within a reasonable range, which may control the generation and correction of aberration, and may allow the optical system to diffuse the rays within the full field of view by a small angle.

In at least one embodiment, the optical system satisfies the relationship of 0.2<|(R51-R52)/(R51+R52)|<0.5. The optical system may further satisfy the relationship of 0.25<|(R51-R52)/(R51+R52)|<0.45. The above relationship may effectively correct the astigmatism of the optical system, and the difference in surface shape of the two surfaces is small, which may reduce the incident angle of the rays at the two surfaces.

In at least one embodiment, the optical system satisfies the relationship of 0.8<DL/TTL<0.9. The optical system may further satisfy the relationship of 0.83<DL/TTL<0.87. Wherein, DL is a distance from the object side surface of the first lens to the image side surface of the seventh lens along the optical axis, and TTL is the distance from the object side surface of the first lens to the imaging plane of the optical system along the optical axis. The above relationship reasonably controls the ratio of the distance from the object side surface of the first lens to the image side surface of the seventh lens along the optical axis to the distance from the object side surface of the first lens to the imaging plane of the optical system along the optical axis. Thus, on the premise of miniaturization of the optical system, the distance from the image side surface of the seventh lens to the imaging plane of the optical system along the optical axis may be increased, which may increase the layout space at the structure end of the camera module.

In at least one embodiment, the optical system satisfies the relationship of 1.15<TTL/f<1.55. The optical system may further satisfy the relationship of 1.22<TTL/f<1.5. The above relationship reasonably controls the ratio of the distance from the object side surface of the first lens to the imaging plane of the optical system along the optical axis to the effective focal length of the optical system. Thus, the optical system may have a small total optical length to achieve miniaturization, and may have better telephoto performance.

In at least one embodiment, the optical system satisfies the relationship of 0.8<ImgH/f<1.2. The optical system may further satisfy the relationship of 0.9<ImgH/f<1.1. Wherein ImgH is half of an image height corresponding to the maximum field of view of the optical system. The above relationship may allow the refractive power of the optical system to the rays to match the size of the imaging plane, thereby improving the imaging quality of the optical system.

In at least one embodiment, the optical system satisfies the relationship of 1.4<f123/f<2.4. The optical system may further satisfy the relationship of 1.4<f123/f<2.4. Wherein, f123 is a combined effective focal length of the first lens, the second lens, and the third lens. The above relationship reasonably controls the focal lengths of the first lens to the third lens, which allows mutual regulation among the first lens and the third lens and reduces aberration. Furthermore, the manufacture of the first lens to the third lens may be simplified, and the tolerance sensitivity may be reduced.

In at least one embodiment, the optical system satisfies the relationship of FOV/(FNOmax FNOmin)<35deg. The optical system may further satisfy the relationship of 28deg<FOV/(FNOmax FNOmin)<33deg. Wherein, FOV is the maximum field of view of the optical system, FNOmax is the maximum F-number of the optical system, and FNOmin is the minimum F-number of the optical system. The above relationship may enable the optical system to have a large field of view, and the F-number of the optical system is maintained within a reasonable range, thereby enabling the optical system to both have a large field of view and a large aperture. Thus, the optical system may have a reasonable amount of incoming rays, thereby improving the overall illumination of the images and making the optical system suitable for different illuminated environments.

In at least one embodiment, the optical system satisfies the relationship of 3.5<|f7/SAG711. The optical system may further satisfy the relationship of 4<|f7/SAG71|<7. In at least one embodiment, the optical system satisfies the relationship of 3<|f7/SAG72|. The optical system may further satisfy the relationship of 4.5<|f7/SAG72|<7.5. Wherein, SAG71 is the vector height at the maximum effective aperture of the object side surface of the seventh lens, and SAG72 is a vector height at a maximum effective aperture of the object side surface of the seventh lens. Any above relationship reasonably controls the effective focal length and the surface shape of the seventh lens, which may minimize chromatic aberration and spherical aberration and improve the imaging quality of the optical system. At the same time, any above relationship may further reasonably allocate the refractive power of the seventh lens, enhance the light receiving ability of the optical system, reduce the total length of the optical system, and achieve miniaturization of the optical system.

In at least one embodiment, the optical system satisfies the relationship of $2 < (|SAG71| + |SAG72|)/CT7 < 14$. The optical system may further satisfy the relationship of $2.7 < (|SAG71| + |SAG72|)/CT7 < 13$. Wherein, CT7 is the thickness of the seventh lens at the optical axis. The above relationship reasonably controls the refractive power and the thickness of the seventh lens at any position of the seventh lens perpendicular to the optical axis, which may prevent the seventh lens from being too thick or too thin, reduce the incident angle of the rays at the object side surface of the seventh lens, and reduce the tolerance sensitivity of the optical system. At the same time, the seventh lens may have multiple inflection points, which may correct the distortion and field curvature generated by the lenses located at the object side of the seventh lens, and an even distribution of the refractive power of the lenses near the imaging plane of the optical system may be obtained.

In at least one embodiment, the optical system satisfies the relationship of $0.5 < Yc62/SD62 < 0.75$. The optical system may further satisfy the relationship of $0.55 < Yc62/SD62 < 0.7$. Wherein, Yc62 is a vertical height from an off-axis point of the image side surface of the sixth lens to the optical axis, and SD62 is a maximum effective aperture of the image side surface of the sixth lens. The above relationship reasonably controls the refractive power and the thickness of the sixth lens at any position of the seventh lens perpendicular to the optical axis, which may prevent the sixth lens from being too thick or too thin, reduce the incident angle of the rays at the object side surface of the sixth lens, and reduce the tolerance sensitivity of the optical system.

In at least one embodiment, the optical system satisfies the relationship of $0.25 < Yc72/SD72 < 0.5$. The optical system may further satisfy the relationship of $0.3 < Yc72/SD72 < 0.45$. Wherein, Yc72 is a vertical height from an off-axis point of the image side surface of the seventh lens to the optical axis, and SD72 is a maximum effective aperture of the image side surface of the seventh lens. The above relationship reasonably controls the refractive power and the thickness of the seventh lens at any position of the seventh lens perpendicular to the optical axis, which may prevent the seventh lens from being too thick or too thin, reduce the incident angle of the rays at the object side surface of the seventh lens, and reduce the tolerance sensitivity of the optical system.

In at least one embodiment, the optical system satisfies the relationship of $0.4 < (AT34+CT5)/(AT45+AT56) < 2$. The optical system may further satisfy the relationship of $0.5 < (AT34+CT5)/(AT45+AT56) < 1.9$. Wherein, AT34 is a distance from the image side surface of the third lens to the object side surface of the fourth lens along the optical axis, CT5 is a thickness of the fifth lens at the optical axis, AT45 is a distance from the image side surface of the fourth lens to the object side surface of the fifth lens along the optical axis, and AT56 is a distance from the image side surface of the fifth lens to the object side surface of the sixth lens along the optical axis. The above relationship may reduce the sensitivity of the optical system, enable the fifth lens to diverge the exit angle of the rays, and enable the optical system to match larger imaging planes.

In at least one embodiment, the optical system satisfies the relationship of $0.8 < (CT1+CT3)/(CT4+CT5) < 1.3$. The optical system may further satisfy the relationship of $0.9 < (CT1+CT3)/(CT4+CT5) < 1.2$. Wherein, CT1 is a thickness of the first lens at the optical axis, CT3 is a thickness of the third lens at the optical axis, CT4 is a thickness of the fourth lens at the optical axis, and CT5 is a thickness of the fifth lens at the optical axis. The above relationship may reduce the sensitivity of the optical system, reduce the incident angle of the rays entering the optical system, and maintain the miniaturization characteristics of the optical system. At the same time, the above relationship may further simplify the setting of the surface shape of the first lens and the third lens, mutual regulation among the first lens and the third lens may be achieved, and the aberration may be reduced. The burden for aberration correction of the lenses at the image side of the third lens may be reduced. The manufacture of the first lens and the third lens may be simplified, and the tolerance sensitivity may be reduced.

In at least one embodiment, the optical system satisfies the relationship of $0.8 < (CT1+CT2)/(CT3+CT4) < 1.5$. The optical system may further satisfy the relationship of $0.9 < (CT1+CT2)/(CT3+CT4) < 1.4$. Wherein, CT2 is a thickness of the second lens at the optical axis. The above relationship may be beneficial for forming a double Gaussian structure.

In at least one embodiment, the optical system satisfies the relationship of $0.7 < (AT34+AT23)/(AT45+AT56) < 1.1$. The optical system may further satisfy the relationship of $0.8 < (AT34+AT23)/(AT45+AT56) < 1$. Wherein, AT23 is a distance from the image side surface of the second lens to the object side surface of the third lens along the optical axis. The above relationship may control the spacing between the second lens and the third lens and improve the imaging quality and assemblability.

In at least one embodiment, the optical system satisfies the relationship of $2.5 < (CT1+CT2+CT3+CT4)/AT23 < 5$. The optical system may further satisfy the relationship of $3 < (CT1+CT2+CT3+CT4)/AT23 < 4.4$. The above relationship may control the ratio of the spacing between two lenses to the thickness of the lenses, and a double Gaussian structure may be formed.

In at least one embodiment, the optical system satisfies the relationship of $0.8 < (CT5+CT6+CT7)/AT67 < 2.2$.

The optical system may further satisfy the relationship of $0.9<(CT5+CT6+CT7)/AT67<2.1$. Wherein, CT6 is a thickness of the sixth lens at the optical axis, CT7 is a thickness of the seventh lens at the optical axis, and AT67 is a distance from the image side surface of the sixth lens to the object side surface of the seventh lens along the optical axis. The above relationship may control the spacing between the sixth lens and the seventh lens, thereby ensuring sufficient spacing for aberration correction.

In some embodiments, the optical system further includes a filter. The filter may be an infrared cutoff filter or an infrared bandpass filter. The infrared cutoff filter filters out infrared rays, and the infrared bandpass filter only allows the infrared rays to pass through. In the present application, the filter is an infrared cutoff filter having a fixed position relative to each lens of the optical system, and the infrared cutoff filter prevents the infrared rays, which may cause interference to normal imaging, from reaching the imaging plane of the optical system. The filter may function as a part of the optical system and be assembled together with each lens. In other embodiments, the filter may also be a component independent from the optical system, and the filter may be installed between the optical system and the image sensor during the assembly of the optical system and the image sensor. The filter may be made by coating on an optical glass. The infrared filter may also be a colored glass or made of other materials according to actual needs, which are not limited in the present application. In other embodiments, the function of the filter may also be realized by coating a filter layer on at least one of the first to seventh lenses.

First embodiment

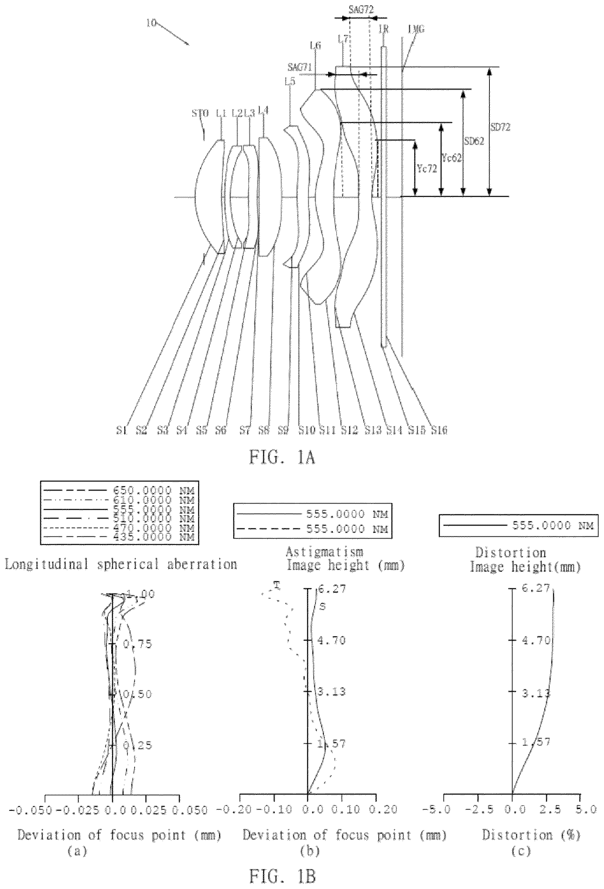

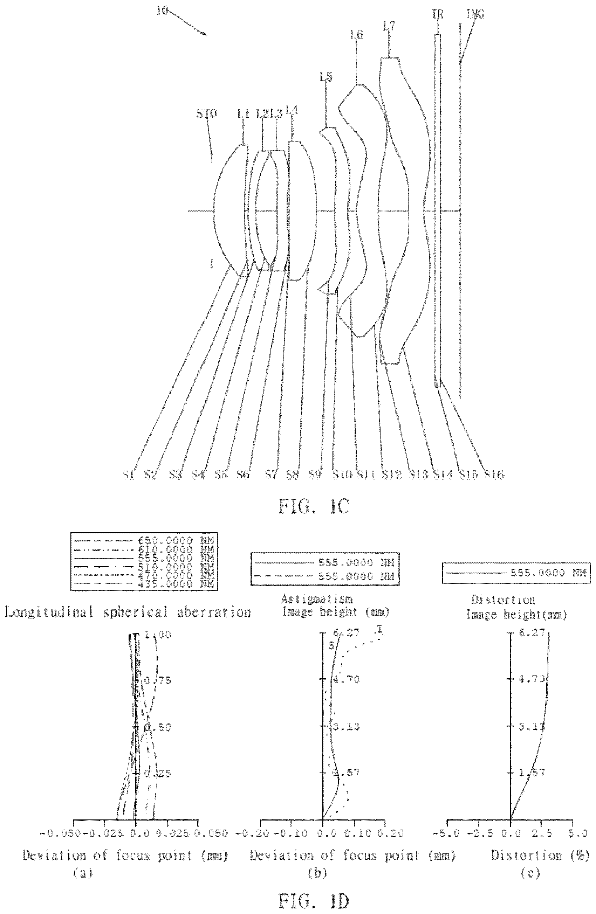

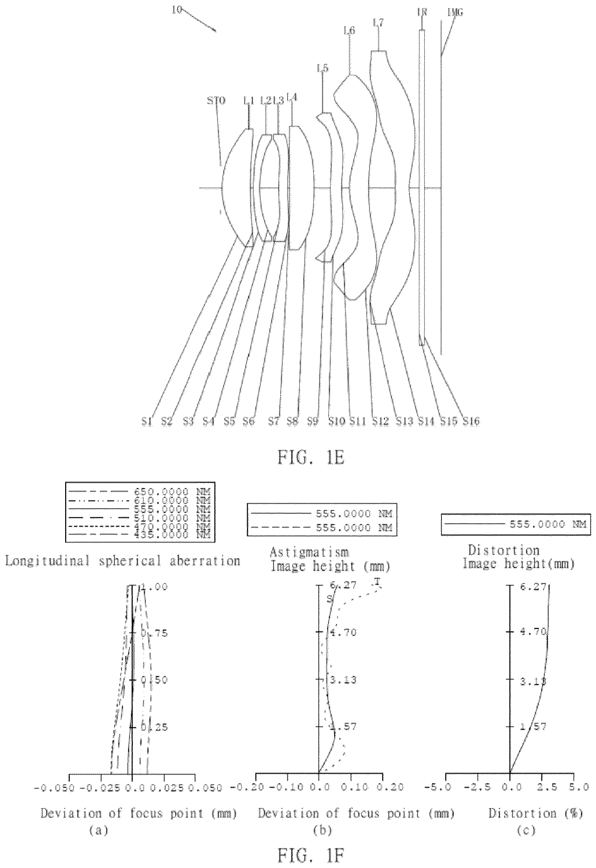

Referring to FIGS. 1A, 1C, and 1E, the optical system 10 of the embodiment, from the object side to the image side along the optical axis direction, sequentially includes the first lens L1, the second lens L2, the third lens L3, the fourth lens L4, the fifth lens L5, the sixth lens L6, and the seventh lens L7.

The first lens L1 has positive refractive power, the object side surface S1 is convex near the optical axis, and the image side surface S2 is concave near the optical axis.

The second lens L2 has negative refractive power, the object side surface S3 is convex near the optical axis, and the image side surface S4 is concave near the optical axis.

The third lens L3 has negative refractive power, the object side surface S5 is convex near the optical axis, and the image side surface S6 is concave near the optical axis.

The fourth lens L4 has positive refractive power, the object side surface S7 is convex near the optical axis, and the image side surface S8 is convex near the optical axis.

The fifth lens L5 has negative refractive power, the object side surface S9 is convex near the optical axis, and the image side surface S10 is concave near the optical axis.

The sixth lens L6 has positive refractive power, the object side surface S11 is convex near the optical axis, and the image side surface S12 is concave near the optical axis.

The seventh lens L7 has negative refractive power, and the object side surface S13 is convex near the optical axis, and the image side surface S14 is concave near the optical axis.

In addition, the optical system 10 further includes an aperture stop STO, a filter IR, and an imaging plane IMG. A variable aperture may also be provided on the object side of the optical system 10. In the embodiment, the aperture stop STO is located at the object side of the first lens L1 to control the amount of incoming light entering the optical system 10. FIGS. 1A, 1C, and 1E show the optical system 10 with the aperture stop STO in three different states. When the aperture stop STO is in three different states, the optical system 10 has different F-numbers. For the convenience of describing the three states of the aperture stop STO, the aperture stop STO in the state shown in FIG. 1A is referred to as the aperture stop STO in a first aperture state of the optical system 10, the aperture stop STO in the state shown in FIG. 1C is referred to as the aperture stop STO in a second aperture state of the optical system 10, and the aperture stop STO in the state shown in FIG. 1E is referred to as the aperture stop STO in a third aperture state of the optical system 10. The aperture stop STO includes but is not limited to the above three states. By adjusting a distance A from the aperture stop STO to the object side surface S1 of the first lens L1 or adjusting the aperture size of the aperture stop STO, other different states of the aperture stop STO may also be obtained, and the optical system 10 may obtain other F-numbers.

The filter IR is located between the seventh lens L7 and the imaging plane IMG, and the filter IR includes an object side surface S15 and an image side surface S16. The filter IR is an infrared cutoff filter to filter out infrared rays, such that only visible rays with a wavelength of 380nm to 780nm reach the imaging plane IMG. The infrared cutoff filter IR may be made of glass or plastic having a coating thereon. Each of the first lens L1 to the seventh lens L7 may be made of glass or plastic. An effective pixel area of the image sensor is located at the imaging plane IMG. The image sensor captures information with different wavelength from the object for subsequent processing.

Table 1A shows various parameters of the optical system 10 of the embodiment, wherein Y radius is the radius of curvature of the object side surface or image side surface of the related surface numeral at the optical axis. The surface numerals S1 and S2 are the object side surface S1 and image side surface S2 of the first lens L1, respectively.

That is, for a same lens, the surface with a smaller surface numeral is the object side surface, and the surface with a larger surface numeral is the image side surface. In a "thickness" column of each lens, the first value is the thickness of the lens at the optical axis, and the second value is the distance from the image side surface of the lens to the next surface at the optical axis. The focal length, the refractive index, and Abbe number are obtained by visible rays with a reference wavelength of 587.6 nm. The units of the Y radius, the thickness, and the focal length are mm.

Table 1A

| Surface numeral | Surface name | Surface type | Y radius (mm) | Thickness (mm) | Material | Refractive index | Abbe number | Focal length (mm) |
|---|---|---|---|---|---|---|---|---|
| | | | First embodiment | | | | | |
| | Object side | sphere | infinity | infinity | | | | |
| STO | aperture stop | sphere | infinity | A | | | | |
| S1 | L1 | asphere | 3.342 | 1.128 | plastic | 1.546 | 55.932 | 7.985 |
| S2 | | asphere | 12.607 | 0.122 | | | | |
| S3 | L2 | asphere | 6.308 | 0.260 | plastic | 1.694 | 18.403 | -23.395 |
| S4 | | asphere | 4.466 | 0.517/0.250 | | | | |
| S5 | L3 | asphere | 11.703 | 0.369 | plastic | 1.694 | 18.403 | -42.877 |
| S6 | | asphere | 8.291 | -0.047/0.124 | | | | |
| S7 | L4 | asphere | 36.229 | 0.976 | plastic | 1.546 | 55.932 | 17.453 |
| S8 | | asphere | -12.810 | 0.654 | | | | |
| S9 | L5 | asphere | 7.502 | 0.472 | plastic | 1.569 | 37.707 | -15.596 |
| S10 | | asphere | 3.972 | 0.297 | | | | |
| S11 | L6 | asphere | 2.526 | 0.774 | plastic | 1.546 | 55.932 | 5.931 |
| S12 | | asphere | 10.226 | 1.087 | | | | |
| S13 | L7 | asphere | 12.986 | 0.549 | plastic | 1.546 | 55.932 | -5.694 |
| S14 | | asphere | 2.471 | 0.400 | | | | |
| S15 | filter IR | sphere | infinity | 0.210 | glass | 1.518 | 64.197 | |
| S16 | | sphere | infinity | 0.685 | | | | |
| IMG | imaging plane | sphere | infinity | 0.000 | | | | |

Table 1B

| | f (mm) | FNO | FOV (deg) | TTL (mm) | A (mm) |
|---|---|---|---|---|---|
| First aperture | 6.98 | 1.4 | 82.13 | 8.9 | -0.38 |
| Second aperture | 6.98 | 2.0 | 82.13 | 8.9 | 0.07 |
| Third aperture | 6.98 | 4.0 | 82.13 | 8.9 | 0.07 |

Wherein, f is the focal length of optical system 10, FNO is the F-number of optical system 10, FOV is the maximum field of view of the optical system 10, TTL is the distance from the object side surface S1 of the first lens L1 to the imaging plane IMG along the optical axis (i.e., the total optical length), and A is the distance from the aperture stop STO to the object side surface S1 of the first lens L1 along the direction parallel to the optical axis.

In the embodiment, the object side surface and image side surface of each of the first lens L1 to the seventh lens L7 are both aspherical, and the surface shape x of the aspherical surface may be expressed but not limited to the following aspherical formula:

$$x = \frac{ch^2}{1 + \sqrt{1 - (k+1)c^2h^2}} + \sum Aih^i$$

Wherein, x is a distance from the corresponding point of the aspherical surface to a plane tangent to the vertex, h is a distance from the corresponding point of the aspherical surface to the optical axis, c is a curvature of a vertex of the aspherical surface, k is cone constant, and Ai is a coefficient corresponding to the $i^{th}$ high-order term in the above aspherical surface formula. Table 1C shows the high-order coefficients A4, A6, A8, A10, A12, A14, A16, A18, A20, A22, A24, A26, A28, and A30 that applied for the aspherical surfaces S1, S2, S3, S4, S5, S6, S7, S8, S9, S10, S11, S12, S13, and S14 in the first embodiment.

Table 1C

| Surface numeral | k | A4 | A6 | A8 | A10 |
|---|---|---|---|---|---|
| S1 | 0.0000E+00 | 2.4491E-03 | -4.4982E-03 | 4.8705E-03 | -3.1888E-03 |
| S2 | 0.0000E+00 | -1.2269E-02 | 6.7648E-03 | -2.7965E-03 | 7.2672E-04 |
| S3 | 0.0000E+00 | -2.0939E-02 | 8.5506E-03 | -5.9305E-05 | -1.8559E-03 |
| S4 | 0.0000E+00 | -1.2906E-02 | 7.4491E-03 | -2.1598E-03 | 2.2658E-04 |
| S5 | 0.0000E+00 | -1.8212E-02 | 6.3330E-03 | -1.4637E-02 | 1.4385E-02 |
| S6 | 0.0000E+00 | -1.9578E-02 | 1.1557E-02 | -1.7962E-02 | 1.3278E-02 |
| S7 | 0.0000E+00 | -1.9224E-02 | 4.7417E-02 | -9.7451E-02 | 1.3000E-01 |
| S8 | 0.0000E+00 | -1.2541E-02 | 1.5228E-03 | 3.9933E-04 | -1.4518E-03 |
| S9 | 0.0000E+00 | -5.9242E-02 | 6.8951E-02 | -6.8066E-02 | 5.0793E-02 |
| S10 | 0.0000E+00 | -1.4550E-01 | 1.4028E-01 | -1.1314E-01 | 6.5936E-02 |
| S11 | -2.7996E+00 | -7.6374E-02 | 7.2870E-02 | -5.1072E-02 | 2.5411E-02 |
| S12 | 0.0000E+00 | -4.1856E-03 | 1.0209E-02 | -5.2701E-03 | 1.3794E-03 |
| S13 | 0.0000E+00 | -9.1232E-02 | 3.4569E-02 | -1.0111E-02 | 2.1495E-03 |
| S14 | -5.8693E+00 | -5.5578E-02 | 2.3681E-02 | -7.5165E-03 | 1.7242E-03 |
| Surface numeral | A12 | A14 | A16 | A18 | A20 |
| S1 | 1.2896E-03 | -3.2604E-04 | 5.0005E-05 | -4.2499E-06 | 1.5286E-07 |
| S2 | -5.5899E-05 | -2.7808E-05 | 9.4766E-06 | -1.2132E-06 | 5.8234E-08 |
| S3 | 1.1982E-03 | -3.9303E-04 | 7.3718E-05 | -7.5022E-06 | 3.2269E-07 |
| S4 | 3.5141E-04 | -2.5623E-04 | 8.3908E-05 | -1.3792E-05 | 9.1593E-07 |
| S5 | -8.6241E-03 | 3.1370E-03 | -6.7472E-04 | 7.8924E-05 | -3.8525E-06 |
| S6 | -6.1956E-03 | 1.9124E-03 | -3.7325E-04 | 4.1129E-05 | -1.9240E-06 |
| S7 | -1.2183E-01 | 8.2195E-02 | -4.0279E-02 | 1.4419E-02 | -3.7678E-03 |
| S8 | -7.7783E-05 | 1.7176E-03 | -1.6870E-03 | 8.6777E-04 | -2.8110E-04 |
| S9 | -3.0062E-02 | 1.4159E-02 | -5.2072E-03 | 1.4583E-03 | -3.0351E-04 |
| S10 | -2.7937E-02 | 8.7059E-03 | -2.0126E-03 | 3.4637E-04 | -4.4185E-05 |
| S11 | -9.2512E-03 | 2.4659E-03 | -4.8117E-04 | 6.8544E-05 | -7.0708E-06 |
| S12 | -2.2214E-04 | 2.1268E-05 | -6.5664E-07 | -1.2638E-07 | 2.1716E-08 |

(continued)

| Surface numeral | A12 | A14 | A16 | A18 | A20 |
|---|---|---|---|---|---|
| S13 | -3.0145E-04 | 2.7055E-05 | -1.4710E-06 | 3.5868E-08 | 9.8935E-10 |
| S14 | -2.8673E-04 | 3.4930E-05 | -3.1431E-06 | 2.0938E-07 | -1.0271E-08 |
| Surface numeral | A22 | A24 | A26 | A28 | A30 |
| S7 | 7.1055E-04 | -9.4126E-05 | 8.3042E-06 | -4.3782E-07 | 1.0429E-08 |
| S8 | 6.0377E-05 | -8.6226E-06 | 7.8955E-07 | -4.2048E-08 | 9.9219E-10 |
| S9 | 4.5742E-05 | -4.8210E-06 | 3.3569E-07 | -1.3836E-08 | 2.5513E-10 |
| S10 | 4.1161E-06 | -2.7164E-07 | 1.2009E-08 | -3.1838E-10 | 3.8210E-12 |
| S11 | 5.1983E-07 | -2.6458E-08 | 8.8373E-10 | -1.7394E-11 | 1.5267E-13 |
| S12 | -1.7394E-09 | 8.4247E-11 | -2.5139E-12 | 4.2713E-14 | -3.1727E-16 |
| S13 | -1.2066E-10 | 4.8824E-12 | -1.0884E-13 | 1.3317E-15 | -7.0316E-18 |
| S14 | 3.6523E-10 | -9.1372E-12 | 1.5218E-13 | -1.5123E-15 | 6.7747E-18 |

From (a) of each of FIG. 1B (first aperture state), FIG. 1D (second aperture state), and FIG. 1F (third aperture state), a longitudinal spherical aberration diagram of the optical system 10 in the first embodiment at different focal lengths and at wavelengths of 650.0000 nm, 610.0000 nm, 555.0000 nm, 5100.0000 nm, 470.0000 nm, and 435.0000 nm is shown. The horizontal coordinate along the X-axis represents the deviation of the focus point in mm, that is, the distance from the imaging plane IMG to the intersection of the rays and the optical axis. The vertical coordinate along the Y-axis represents the normalized field of view. The longitudinal spherical aberration diagram represents the deviation of the focus point when the rays with different wavelengths travel through the lenses of the optical system 10. From (a) of each of FIGS. 1B, 1D, and 1F, the deviation of the focus point of the rays with different wavelengths in the first embodiment are almost the same. Thus, the diffuse spots or chromatic halos in the images are suppressed, indicating that the imaging quality of the optical system 10 in the embodiment is good.

From (b) of each of FIGS. 1B, 1D, and 1F, an astigmatism diagram of the optical system 10 in the first embodiment at different focal lengths and at a wavelength of 555.0000 nm is shown. The horizontal coordinate along the X-axis represents the deviation of the focus point in mm. The vertical coordinate along the Y-axis represents the image heigh in mm. The S curve of the astigmatism diagram represents the curvature in the sagittal direction at 555.0000 nm, and the T curve of the astigmatism diagram represents the curvature in the tangential direction at 555.0000 nm. From (b) of each of FIGS. 1B, 1D, and 1F, the field curvature of the optical system 10 is small, the field curvature and astigmatism of each field of view have been corrected, and the central and marginal fields have clear images.

From (c) of each of FIGS. 1B, 1D, and 1F, a distortion diagram of the optical system 10 in the first embodiment at different focal lengths and at a wavelength of 555.0000 nm is shown. The horizontal coordinate along the X-axis represents the distortion (%), and the vertical coordinate along the Y-axis represents the image height in mm. The distortion curve represents the magnitude of distortion corresponding to different field of views. From (c) of each of FIGS. 1B, 1D, and 1F, under the wavelength of 555.0000nm, the distortion of the images caused by the main rays is small, and the imaging quality of the optical system 100 is good.

From FIGS. 1B, 1D, and 1F, the optical system 10 of the embodiment has small aberration and good imaging quality.

Second embodiment

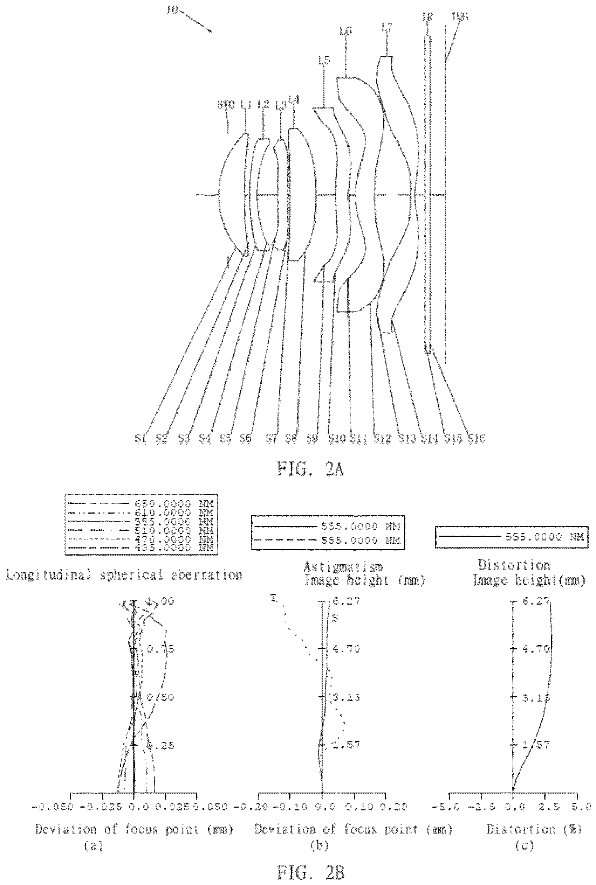

Referring to FIG. 2A, the structures of the lenses of the optical system 10 in the embodiment are the same as those of the first embodiment.

Table 2A shows various parameters of the optical system 10 in the embodiment, wherein the focal length, the refractive index, and the Abbe number are obtained by visible rays with a reference wavelength of 587.6 nm. The units of the Y radius, the thickness, and the focal length are mm. The meanings of other parameters are the same as those of the first embodiment.

Table 2A

| Surface numeral | Surface name | Surface type | Y radius (mm) | Thickness (mm) | Material | Refractive index | Abbe number | Focal length (mm) |
|---|---|---|---|---|---|---|---|---|
| | | | | Second embodiment | | | | |
| | Object side | sphere | infinity | infinity | | | | |
| STO | aperture stop | sphere | infinity | A | | | | |
| S1 | L1 | asphere | 3.378 | 1.043 | plastic | 1.546 | 55.932 | 8.256 |
| S2 | | asphere | 12.005 | 0.192 | | | | |
| S3 | L2 | asphere | 7.065 | 0.301 | plastic | 1.694 | 18.403 | -24.380 |
| S4 | | asphere | 4.897 | 0.567/0.245 | | | | |
| S5 | L3 | asphere | 14.514 | 0.392 | plastic | 1.694 | 18.403 | -40.404 |
| S6 | | asphere | 9.458 | -0.149/0.250 | | | | |
| S7 | L4 | asphere | 54.705 | 1.045 | plastic | 1.546 | 55.932 | 16.266 |
| S8 | | asphere | -10.532 | 0.772 | | | | |
| S9 | L5 | asphere | 8.591 | 0.506 | plastic | 1.569 | 37.707 | -13.991 |
| S10 | | asphere | 4.043 | 0.259 | | | | |
| S11 | L6 | asphere | 2.558 | 0.774 | plastic | 1.546 | 55.932 | 5.720 |
| S12 | | asphere | 12.631 | 1.434 | | | | |
| S13 | L7 | asphere | 44.666 | 0.170 | plastic | 1.546 | 55.932 | -5.640 |
| S14 | | asphere | 2.877 | 0.400 | | | | |
| S15 | Filter IR | sphere | infinity | 0.210 | glass | 1.518 | 64.197 | |
| S16 | | sphere | infinity | 0.608 | | | | |
| IMG | imaging plane | sphere | infinity | 0.000 | | | | |

Table 2B

| | f (mm) | FNO | FOV (deg) | TTL (mm) | A (mm) |
|---|---|---|---|---|---|
| First aperture | 7.145 | 1.4 | 80.908 | 9.1 | -0.38 |
| Second aperture | 7.145 | 2.0 | 80.908 | 9.1 | 0.07 |
| Third aperture | 7.145 | 4.0 | 80.908 | 9.1 | 0.07 |

Table 2C shows the high-order coefficients that applied for the aspherical surfaces in the second embodiment, and the surface shape of each lens is limited by the formula mentioned in the first embodiment.

Table 2C

| Surface numeral | k | A4 | A6 | A8 | A10 |
|---|---|---|---|---|---|
| S1 | 0.0000E+00 | 8.1481E-04 | -8.0924E-04 | 6.3792E-04 | -2.7263E-04 |
| S2 | 0.0000E+00 | -1.0247E-02 | 5.2766E-03 | -2.9649E-03 | 1.6338E-03 |
| S3 | 0.0000E+00 | -1.4437E-02 | -1.1240E-02 | 3.7585E-02 | -4.9176E-02 |

(continued)

| Surface numeral | k | A4 | A6 | A8 | A10 |
|---|---|---|---|---|---|
| S4 | 0.0000E+00 | 6.1356E-04 | -4.6754E-02 | 1.1668E-01 | -1.5441E-01 |
| S5 | 0.0000E+00 | -1.1608E-02 | -3.2211E-02 | 1.0564E-01 | -2.1557E-01 |
| S6 | 0.0000E+00 | -2.5285E-02 | 3.4247E-02 | -6.6093E-02 | 7.8922E-02 |
| S7 | 0.0000E+00 | -1.4174E-02 | 2.7081E-02 | -4.6621E-02 | 5.1111E-02 |
| S8 | 0.0000E+00 | -9.2209E-03 | -4.1399E-03 | 1.0669E-02 | -1.4553E-02 |
| S9 | 0.0000E+00 | -3.6991E-02 | 2.3589E-02 | -1.2188E-02 | 5.2696E-03 |
| S10 | 0.0000E+00 | -9.9313E-02 | 4.8560E-02 | -1.8292E-02 | 4.6647E-03 |
| S11 | -2.9874E+00 | -2.9632E-02 | 7.7475E-03 | 1.2094E-04 | -1.1661E-03 |
| S12 | 0.0000E+00 | 2.9982E-02 | -1.8262E-02 | 7.9977E-03 | -2.5315E-03 |
| S13 | 0.0000E+00 | -9.1908E-02 | 3.4524E-02 | -9.6694E-03 | 2.0071E-03 |
| S14 | -9.7675E+00 | -5.2725E-02 | 2.0451E-02 | -5.7755E-03 | 1.1861E-03 |
| Surface numeral | A12 | A14 | A16 | A18 | A20 |
| S1 | 5.9320E-05 | -3.3049E-06 | -1.3058E-06 | 2.8400E-07 | -1.8238E-08 |
| S2 | -6.6855E-04 | 1.7838E-04 | -2.8945E-05 | 2.5807E-06 | -9.7269E-08 |
| S3 | 4.0877E-02 | -2.3075E-02 | 9.0294E-03 | -2.4506E-03 | 4.5286E-04 |
| S4 | 1.1717E-01 | -3.7483E-02 | -1.7819E-02 | 2.7796E-02 | -1.6192E-02 |
| S5 | 2.8585E-01 | -2.6016E-01 | 1.6768E-01 | -7.7732E-02 | 2.5989E-02 |
| S6 | -6.6778E-02 | 4.1466E-02 | -1.9063E-02 | 6.5066E-03 | -1.6462E-03 |
| S7 | -4.0621E-02 | 2.4022E-02 | -1.0430E-02 | 3.2865E-03 | -7.4534E-04 |
| S8 | 1.2541E-02 | -7.4143E-03 | 3.1374E-03 | -9.6610E-04 | 2.1675E-04 |
| S9 | -2.6639E-03 | 1.3682E-03 | -5.5347E-04 | 1.6106E-04 | -3.3060E-05 |
| S10 | -8.0302E-04 | 8.2204E-05 | -1.5661E-06 | -8.2019E-07 | 1.0831E-07 |
| S11 | 5.2047E-04 | -1.3949E-04 | 2.6221E-05 | -3.5627E-06 | 3.5046E-07 |
| S12 | 5.5302E-04 | -8.4969E-05 | 9.4014E-06 | -7.5913E-07 | 4.4774E-08 |
| S13 | -2.9205E-04 | 2.9839E-05 | -2.1828E-06 | 1.1616E-07 | -4.5263E-09 |
| S14 | -1.7808E-04 | 1.9699E-05 | -1.6156E-06 | 9.8323E-08 | -4.4109E-09 |
| Surface numeral | A22 | A24 | A26 | A28 | A30 |
| S3 | -5.4383E-05 | 3.8271E-06 | -1.1976E-07 | 0.0000E+00 | 0.0000E+00 |
| S4 | 5.6775E-03 | -1.2850E-03 | 1.8461E-04 | -1.5380E-05 | 5.6756E-07 |
| S5 | -6.2010E-03 | 1.0276E-03 | -1.1202E-04 | 7.1944E-06 | -2.0504E-07 |
| S6 | 3.0566E-04 | -4.0622E-05 | 3.6681E-06 | -2.0190E-07 | 5.1124E-09 |
| S7 | 1.2011E-04 | -1.3402E-05 | 9.8388E-07 | -4.2733E-08 | 8.3156E-10 |
| S8 | -3.5029E-05 | 3.9685E-06 | -2.9883E-07 | 1.3420E-08 | -2.7171E-10 |
| S9 | 4.7348E-06 | -4.6253E-07 | 2.9351E-08 | -1.0897E-09 | 1.7948E-11 |
| S10 | -3.8785E-09 | -3.1754E-10 | 3.8932E-11 | -1.5670E-12 | 2.3181E-14 |
| S11 | -2.4660E-08 | 1.2071E-09 | -3.8961E-11 | 7.4401E-13 | -6.3576E-15 |
| S12 | -1.9052E-09 | 5.6799E-11 | -1.1216E-12 | 1.3114E-14 | -6.8281E-17 |
| S13 | 1.2842E-10 | -2.5952E-12 | 3.5580E-14 | -2.9806E-16 | 1.1565E-18 |

(continued)

| Surface numeral | A22 | A24 | A26 | A28 | A30 |
|---|---|---|---|---|---|
| S14 | 1.4354E-10 | -3.2874E-12 | 5.0147E-14 | -4.5671E-16 | 1.8764E-18 |

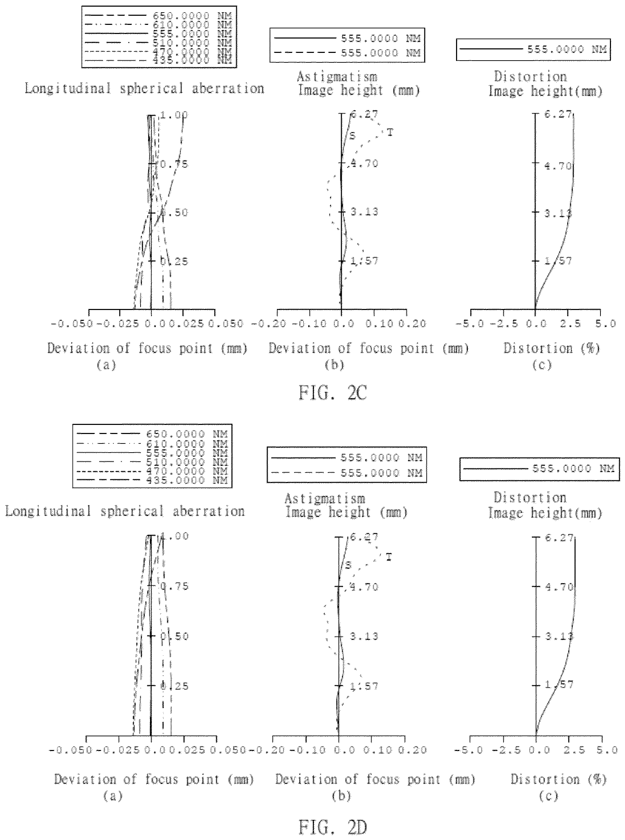

From (a), (b) and (c) of each of FIG. 2B (first aperture state), FIG. 2C (second aperture state), and FIG. 2D (third aperture state), a longitudinal spherical aberration diagram, an astigmatism diagram, and a distortion diagram of the optical system 10 in the second embodiment at different focal lengths are shown, respectively. The longitudinal aberration diagram represents the deviation of the focus point when the rays with different wavelengths travel through the lenses of the optical system 10. The astigmatism diagram represents the curvatures in the sagittal direction and in the tangential direction. The distortion diagram represents the magnitude of distortion corresponding to different field of views. From FIGS. 2B, 2C, and 2D, the longitudinal spherical aberration, the field curvature, and the distortion of the optical system 10 have been controlled, such that the optical system 10 of the embodiment has good imaging quality.

Third Embodiment

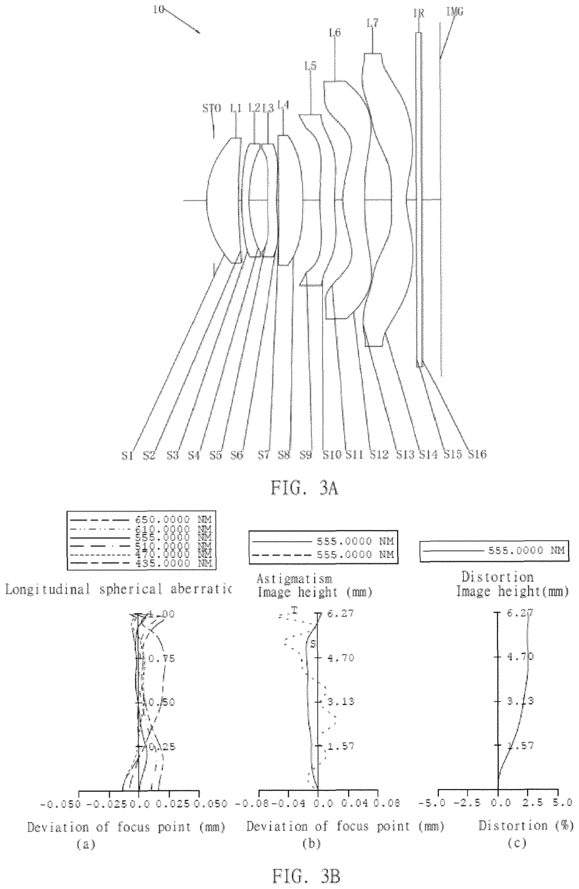

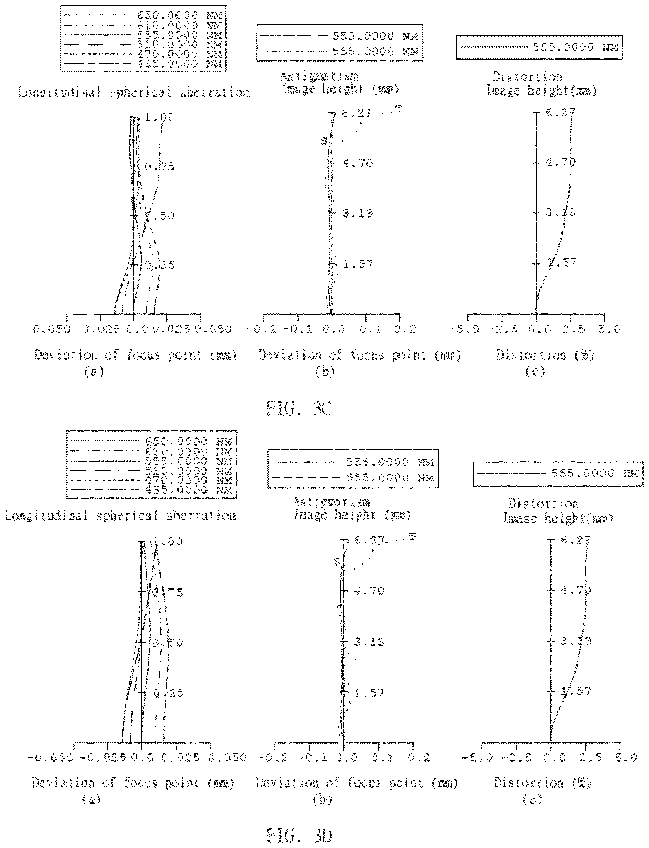

Referring to FIG. 3, the structures of the lenses of the optical system 10 in the embodiment are the same as those of the first embodiment.

Table 3A shows various parameters of the optical system 10 in the embodiment, wherein the focal length, the refractive index, and the Abbe number are obtained by visible rays with a reference wavelength of 587.6 nm. The units of the Y radius, thickness, and the focal length are mm. The meanings of other parameters are the same as those of the first embodiment.

Table 3A

| Surface numeral | Surface name Object side | Surface type sphere | Y radius (mm) infinity | Thickness (mm) infinity | Material | Refractive index | Abbe number | Focal length (mm) |
|---|---|---|---|---|---|---|---|---|
| | | | | Third embodiment | | | | |
| STO | aperture stop | sphere | infinity | A | | | | |
| S1 | L1 | asphere | 3.354 | 1.205 | plastic | 1.546 | 55.932 | 7.899 |
| S2 | | asphere | 13.164 | 0.114 | | | | |
| S3 | L2 | asphere | 7.373 | 0.280 | plastic | 1.694 | 18.403 | -23.769 |
| S4 | | asphere | 5.016 | 0.495/0.213 | | | | |
| S5 | L3 | asphere | 11.360 | 0.348 | plastic | 1.694 | 18.403 | -43.439 |
| S6 | | asphere | 8.147 | -0.049/0.124 | | | | |
| S7 | L4 | asphere | 31.955 | 0.912 | plastic | 1.546 | 55.932 | 19.430 |
| S8 | | asphere | -15.724 | 0.637 | | | | |
| S9 | L5 | asphere | 7.719 | 0.552 | plastic | 1.569 | 37.707 | -15.776 |
| S10 | | asphere | 4.042 | 0.319 | | | | |
| S11 | L6 | asphere | 2.573 | 0.828 | plastic | 1.546 | 55.932 | 5.817 |
| S12 | | asphere | 12.004 | 1.003 | | | | |
| S13 | L7 | asphere | 12.816 | 0.568 | plastic | 1.546 | 55.932 | -5.708 |
| S14 | | asphere | 2.468 | 0.400 | | | | |
| S15 | filterIR | sphere | infinity | 0.210 | glass | 1.518 | 64.197 | |
| S16 | | sphere | infinity | 0.693 | | | | |
| IMG | imaging plane | sphere | infinity | 0.000 | | | | |

Table3B

|  | f (mm) | FNO | FOV (deg) | TTL (mm) | A (mm) |
|---|---|---|---|---|---|
| First aperture | 6.99 | 1.4 | 82.34 | 8.9 | -0.29 |
| Second aperture | 6.99 | 2.0 | 82.34 | 8.9 | 0.03 |
| Third aperture | 6.99 | 4.0 | 82.34 | 8.9 | 0.03 |

Table 3C shows the high-order coefficients that applied for the aspherical surfaces in the third embodiment, and the surface shape of each lens is limited by the formula mentioned in the first embodiment.

Table 3C

| Surface numeral | k | A4 | A6 | A8 | A10 |
|---|---|---|---|---|---|
| S1 | 0.0000E+00 | 2.9274E-04 | -5.9343E-04 | 6.2138E-04 | -4.0571E-04 |
| S2 | 0.0000E+00 | -1.2120E-02 | 1.8513E-03 | 4.5933E-03 | -4.5241E-03 |
| S3 | 0.0000E+00 | -2.0421E-02 | 4.1473E-03 | 8.2684E-03 | -8.7253E-03 |
| S4 | 0.0000E+00 | -8.2527E-03 | -4.9777E-03 | 1.7685E-02 | -1.7608E-02 |
| S5 | 0.0000E+00 | -1.4711E-02 | -5.5060E-03 | 3.7103E-03 | -2.0600E-03 |
| S6 | 0.0000E+00 | -1.7098E-02 | 6.7084E-03 | -1.2371E-02 | 9.2819E-03 |
| S7 | 0.0000E+00 | -8.7385E-03 | 9.0263E-03 | -1.1222E-02 | 6.2029E-03 |
| S8 | 0.0000E+00 | -1.3913E-02 | 3.6596E-03 | -2.4771E-03 | 6.9806E-04 |
| S9 | 0.0000E+00 | -4.7944E-02 | 3.8064E-02 | -2.1681E-02 | 3.2358E-03 |
| S10 | 0.0000E+00 | -1.2681E-01 | 1.0346E-01 | -7.7149E-02 | 4.4147E-02 |
| S11 | -2.8806E+00 | -5.9423E-02 | 4.0833E-02 | -2.2492E-02 | 9.5409E-03 |
| S12 | 0.0000E+00 | -2.3194E-03 | 3.4583E-03 | -8.4360E-04 | -6.6797E-05 |
| S13 | 0.0000E+00 | -8.6068E-02 | 2.7419E-02 | -6.4971E-03 | 1.0792E-03 |
| S14 | -6.3753E+00 | -4.6409E-02 | 1.7177E-02 | -4.9616E-03 | 1.0790E-03 |
| Surface numeral | A12 | A14 | A16 | A18 | A20 |
| S1 | 1.5542E-04 | -3.5473E-05 | 4.5022E-06 | -2.7917E-07 | 5.5020E-09 |
| S2 | 2.1220E-03 | -5.8625E-04 | 9.6478E-05 | -8.7257E-06 | 3.3294E-07 |
| S3 | 4.4113E-03 | -1.3186E-03 | 2.3593E-04 | -2.3281E-05 | 9.7374E-07 |
| S4 | 1.0069E-02 | -3.5672E-03 | 7.7237E-04 | -9.3724E-05 | 4.8969E-06 |
| S5 | 4.3596E-04 | 4.0772E-05 | -3.8889E-05 | 7.3532E-06 | -4.6493E-07 |
| S6 | -4.3747E-03 | 1.3778E-03 | -2.7769E-04 | 3.2021E-05 | -1.5843E-06 |
| S7 | -1.7140E-03 | 2.4588E-04 | -1.6846E-05 | 4.0300E-07 | 0.0000E+00 |
| S8 | 8.3213E-05 | -9.8718E-05 | 2.5168E-05 | -2.9583E-06 | 1.3954E-07 |
| S9 | 5.0554E-03 | -4.6780E-03 | 2.1378E-03 | -6.2191E-04 | 1.2241E-04 |
| S10 | -1.8908E-02 | 6.0062E-03 | -1.4135E-03 | 2.4651E-04 | -3.1718E-05 |
| S11 | -3.2062E-03 | 8.3013E-04 | -1.6268E-04 | 2.3780E-05 | -2.5490E-06 |
| S12 | 6.5562E-05 | -1.6045E-05 | 2.5200E-06 | -2.9115E-07 | 2.4979E-08 |
| S13 | -8.9816E-05 | -2.2724E-06 | 1.4334E-06 | -1.7130E-07 | 1.1623E-08 |
| S14 | -1.7485E-04 | 2.1094E-05 | -1.8955E-06 | 1.2645E-07 | -6.2078E-09 |

(continued)

| Surface numeral | A22 | A24 | A26 | A28 | A30 |
|---|---|---|---|---|---|
| S9 | -1.6495E-05 | 1.4968E-06 | -8.7134E-08 | 2.9243E-09 | -4.2742E-11 |
| S10 | 2.9696E-06 | -1.9653E-07 | 8.7030E-09 | -2.3108E-10 | 2.7779E-12 |
| S11 | 1.9603E-07 | -1.0474E-08 | 3.6809E-10 | -7.6388E-12 | 7.0871E-14 |
| S12 | -1.5460E-09 | 6.6289E-11 | -1.8576E-12 | 3.0535E-14 | -2.2315E-16 |
| S13 | -5.0922E-10 | 1.4731E-11 | -2.7323E-13 | 2.9555E-15 | -1.4215E-17 |
| S14 | 2.2041E-10 | -5.4891E-12 | 9.0730E-14 | -8.9240E-16 | 3.9479E-18 |

From (a), (b) and (c) of each of FIG. 3B (first aperture state), FIG. 3C (second aperture state), and FIG. 3D (third aperture state), a longitudinal spherical aberration diagram, an astigmatism diagram, and a distortion diagram of the optical system 10 in the third embodiment at different focal lengths are shown, respectively. The longitudinal aberration diagram represents the deviation of the focus point when the rays with different wavelengths travel through the lenses of the optical system 10. The astigmatism diagram represents the curvatures in the sagittal direction and in the tangential direction. The distortion diagram represents the magnitude of distortion corresponding to different field of views. From FIGS. 3B, 3C, and 3D, the longitudinal spherical aberration, the field curvature, and the distortion of the optical system 10 have been controlled, such that the optical system 10 of the embodiment has good imaging quality.

Fourth embodiment

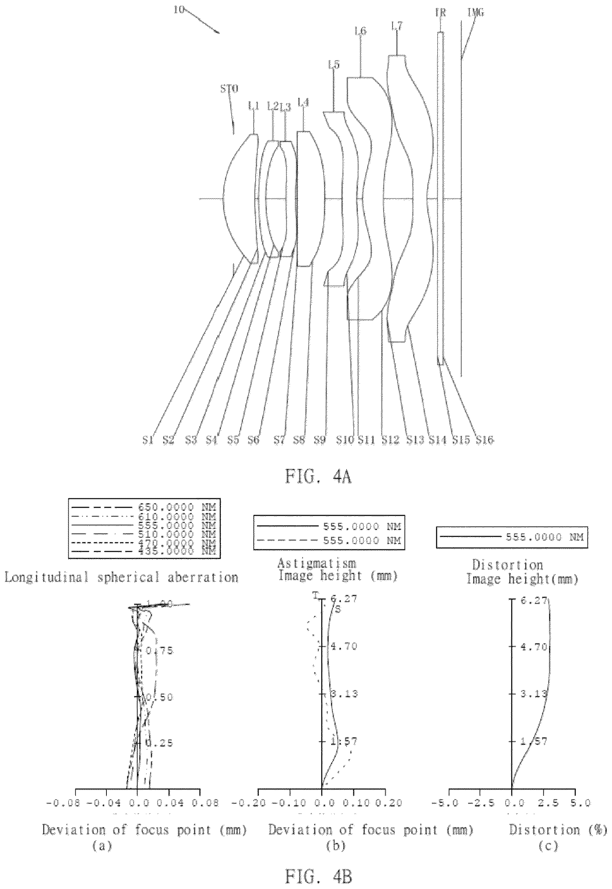

Referring to FIG. 4A, the structures of the lenses of the optical system 10 in the embodiment are the same as those of the first embodiment.

Table 4A shows various parameters of the optical system 10 in the embodiment, wherein the focal length, the refractive index, and the Abbe number are obtained by visible rays with a reference wavelength of 587.6 nm. The units of the Y radius, thickness, and the focal length are mm. The meanings of other parameters are the same as those of the first embodiment.

Table 4A

| Fourth embodiment | | | | | | | | |
|---|---|---|---|---|---|---|---|---|
| Surface numeral | Surface name | Surface type | Y radius (mm) | Thickness (mm) | Material | Refractive index | Abbe number | Focal length (mm) |
|  | Object side | sphere | infinity | infinity |  |  |  |  |
| STO | aperture stop | sphere | infinity | A |  |  |  |  |
| S1 | L1 | asphere | 3.325 | 1.191 | plastic | 1.546 | 55.932 | 7.995 |
| S2 | | asphere | 12.175 | 0.137 | | | | |
| S3 | L2 | asphere | 7.314 | 0.260 | plastic | 1.694 | 18.403 | -23.243 |
| S4 | | asphere | 4.959 | 0.523/0.259 | | | | |
| S5 | L3 | asphere | 12.360 | 0.354 | plastic | 1.694 | 18.403 | -48.500 |
| S6 | | asphere | 8.934 | -0.055/0.116 | | | | |
| S7 | L4 | asphere | 25.710 | 1.036 | plastic | 1.546 | 55.932 | 18.052 |
| S8 | | asphere | -15.761 | 0.646 | | | | |
| S9 | L5 | asphere | 8.779 | 0.566 | plastic | 1.569 | 37.707 | -13.044 |
| S10 | | asphere | 3.927 | 0.225 | | | | |

(continued)

| Surface numeral | Surface name | Surface type | Y radius (mm) | Thickness (mm) | Material | Refractive index | Abbe number | Focal length (mm) |
|---|---|---|---|---|---|---|---|---|
| | | | | Fourth embodiment | | | | |
| S11 | L6 | asphere | 2.500 | 0.779 | plastic | 1.546 | 55.932 | 5.692 |
| S12 | | asphere | 11.358 | 1.101 | | | | |
| S13 | L7 | asphere | 18.210 | 0.548 | plastic | 1.546 | 55.932 | -5.747 |
| S14 | | asphere | 2.649 | 0.400 | | | | |
| S15 | filter IR | sphere | infinity | 0.210 | glass | 1.518 | 64.197 | |
| S16 | | sphere | infinity | 0.681 | | | | |
| IMG | imaging plane | sphere | infinity | 0.000 | | | | |

Table 4B

| | f (mm) | FNO | FOV (deg) | TTL (mm) | A (mm) |
|---|---|---|---|---|---|
| First aperture | 6.267 | 1.4 | 80.879 | 9.1 | -0.38 |
| Second aperture | 6.267 | 2.0 | 80.879 | 9.1 | 0.07 |
| Third aperture | 6.267 | 4.0 | 80.879 | 9.1 | 0.07 |

Table 4C shows the high-order coefficients that applied for the aspherical surfaces in the fourth embodiment, and the surface shape of each lens is limited by the formula mentioned in the first embodiment.

Table 4C

| Surface numeral | k | A4 | A6 | A8 | A10 |
|---|---|---|---|---|---|
| S1 | 0.0000E+00 | 1.7560E-03 | -2.8212E-03 | 2.6913E-03 | -1.5033E-03 |
| S2 | 0.0000E+00 | -1.3670E-02 | 9.1262E-03 | -5.3408E-03 | 2.2141E-03 |
| S3 | 0.0000E+00 | -2.1740E-02 | 9.7784E-03 | -8.9662E-04 | -1.7365E-03 |
| S4 | 0.0000E+00 | -1.3086E-02 | 8.8608E-03 | -4.2183E-03 | 2.4678E-03 |
| S5 | 0.0000E+00 | -1.8987E-02 | 1.0216E-02 | -1.9308E-02 | 1.6864E-02 |
| S6 | 0.0000E+00 | -2.7437E-02 | 3.0315E-02 | -3.7575E-02 | 2.4685E-02 |
| S7 | 0.0000E+00 | -1.0557E+00 | 1.4492E+01 | -1.4221E+02 | 9.6523E+02 |
| S8 | 0.0000E+00 | -6.8152E-01 | 2.0028E+00 | -1.4011E+01 | 9.2488E+01 |
| S9 | 0.0000E+00 | -4.4598E-02 | 3.4962E-02 | -1.3604E-02 | -8.1129E-03 |
| S10 | 0.0000E+00 | -1.4408E-01 | 1.3083E-01 | -9.8315E-02 | 5.3364E-02 |
| S11 | -2.7234E+00 | -8.5493E-02 | 8.3086E-02 | -5.8906E-02 | 2.9439E-02 |
| S12 | 0.0000E+00 | 3.7644E-03 | 6.1252E-03 | -4.2959E-03 | 1.3387E-03 |
| S13 | 0.0000E+00 | -7.5157E-02 | 2.6543E-02 | -7.9722E-03 | 1.8355E-03 |
| S14 | -7.2544E+00 | -4.0623E-02 | 1.5284E-02 | -4.6596E-03 | 1.0513E-03 |
| Surface numeral | A12 | A14 | A16 | A18 | A20 |
| S1 | 4.9746E-04 | -9.6195E-05 | 9.8176E-06 | -3.7227E-07 | -5.5067E-09 |
| S2 | -5.4982E-04 | 6.4538E-05 | 6.3981E-07 | -8.9832E-07 | 6.0122E-08 |

(continued)

| Surface numeral | A12 | A14 | A16 | A18 | A20 |
|---|---|---|---|---|---|
| S3 | 1.3630E-03 | -5.0080E-04 | 1.0201E-04 | -1.0952E-05 | 4.8066E-07 |
| S4 | -1.2784E-03 | 4.8707E-04 | -1.1946E-04 | 1.6617E-05 | -9.8388E-07 |
| S5 | -9.2489E-03 | 3.1953E-03 | -6.7479E-04 | 7.9822E-05 | -4.0459E-06 |
| S6 | -1.0075E-02 | 2.6457E-03 | -4.3637E-04 | 4.1306E-05 | -1.7102E-06 |
| S7 | -4.7898E+03 | 1.7536E+04 | -4.7190E+04 | 9.3014E+04 | -1.3353E+05 |
| S8 | -5.3717E+02 | 2.4318E+03 | -7.9365E+03 | 1.8328E+04 | -2.9864E+04 |
| S9 | 1.4130E-02 | -9.3379E-03 | 3.7771E-03 | -1.0299E-03 | 1.9509E-04 |
| S10 | -2.1033E-02 | 6.0745E-03 | -1.2946E-03 | 2.0426E-04 | -2.3791E-05 |
| S11 | -1.0695E-02 | 2.8364E-03 | -5.5028E-04 | 7.8020E-05 | -8.0289E-06 |
| S12 | -2.7061E-04 | 3.9082E-05 | -4.1333E-06 | 3.1906E-07 | -1.7663E-08 |
| S13 | -2.8560E-04 | 2.9816E-05 | -2.1259E-06 | 1.0423E-07 | -3.4530E-09 |
| S14 | -1.7263E-04 | 2.0779E-05 | -1.8507E-06 | 1.2247E-07 | -5.9939E-09 |
| Surface numeral | A22 | A24 | A26 | A28 | A30 |
| S7 | 1.3781E+05 | -9.9514E+04 | 4.7715E+04 | -1.3647E+04 | 1.7622E+03 |
| S8 | 3.4040E+04 | -2.6502E+04 | 1.3399E+04 | -3.9545E+03 | 5.1563E+02 |
| S9 | -2.5715E-05 | 2.3098E-06 | -1.3442E-07 | 4.5512E-09 | -6.7708E-11 |
| S10 | 2.0203E-06 | -1.2168E-07 | 4.9271E-09 | -1.2031E-10 | 1.3382E-12 |
| S11 | 5.9069E-07 | -3.0192E-08 | 1.0166E-09 | -2.0253E-11 | 1.8070E-13 |
| S12 | 6.7903E-10 | -1.7100E-11 | 2.5005E-13 | -1.4997E-15 | -2.5347E-18 |
| S13 | 7.2501E-11 | -7.7535E-13 | -1.1682E-15 | 1.2554E-16 | -9.8266E-19 |
| S14 | 2.1368E-10 | -5.3825E-12 | 9.0604E-14 | -9.1272E-16 | 4.1544E-18 |

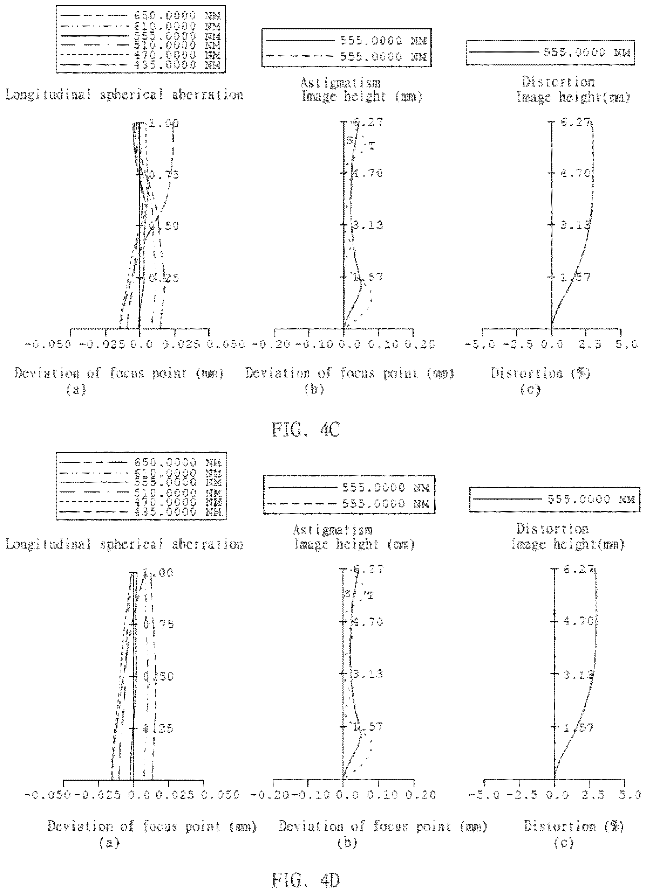

From (a), (b) and (c) of each of FIG. 4B (first aperture state), FIG. 4C (second aperture state), and FIG. 4D (third aperture state), a longitudinal spherical aberration diagram, an astigmatism diagram, and a distortion diagram of the optical system 10 in the fourth embodiment at different focal lengths are shown, respectively. The longitudinal aberration diagram represents the deviation of the focus point when the rays with different wavelengths travel through the lenses of the optical system 10. The astigmatism diagram represents the curvatures in the sagittal direction and in the tangential direction. The distortion diagram represents the magnitude of distortion corresponding to different field of views. From FIGS. 4B, 4C, and 4D, the longitudinal spherical aberration, the field curvature, and the distortion of the optical system 10 have been controlled, such that the optical system 10 of the embodiment has good imaging quality.

Fifth embodiment

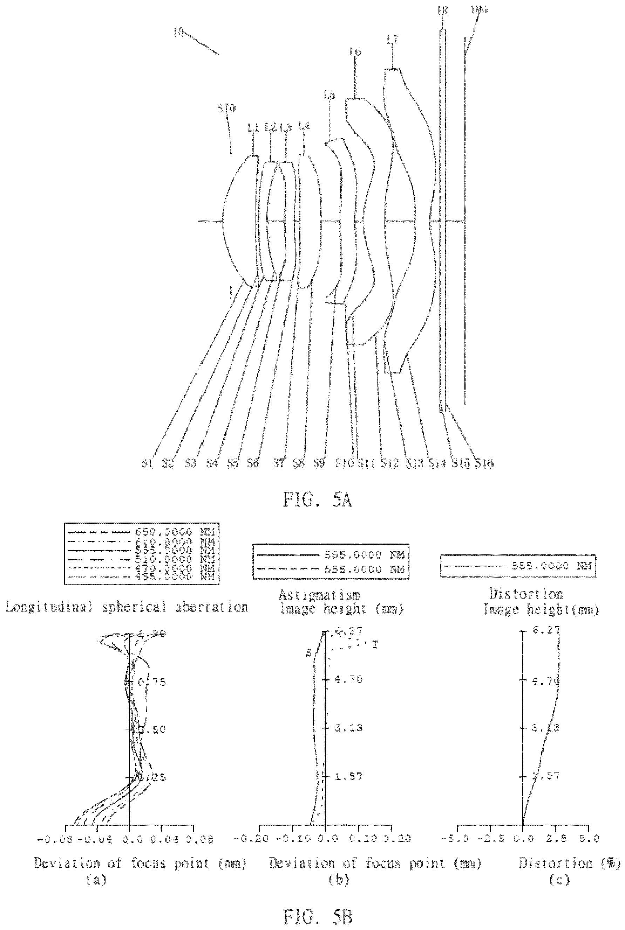

Referring to FIG. 5A, in the embodiment, the object side surface S7 of the fourth lens L4 is concave near the optical axis, and the object side surface S9 of the fifth lens L5 is concave near the optical axis. The other structures in the embodiment are the same as those of the first embodiment.

Table 5A shows various parameters of the optical system 10 in the embodiment, wherein the focal length, the refractive index, and the Abbe number are obtained by visible rays with a reference wavelength of 587.6 nm. The units of the Y radius, thickness, and the focal length are mm. The meanings of other parameters are the same as those of the first embodiment.

Table 5A

| Surface numeral | Surface name | Surface type | Y radius (mm) | Thickness (mm) | Material | Refractive index | Abbe number | Focal length (mm) |
|---|---|---|---|---|---|---|---|---|
| | | | | | Fifth embodiment | | | |
| | Object side | sphere | infinity | infinity | | | | |
| STO | aperture stop | sphere | infinity | A | | | | |
| S1 | L1 | asphere | 3.342 | 1.196 | plastic | 1.546 | 55.932 | 7.902 |
| S2 | | asphere | 12.953 | 0.114 | | | | |
| S3 | L2 | asphere | 9.829 | 0.310 | plastic | 1.694 | 18.403 | -24.217 |
| S4 | | asphere | 6.122 | 0.438/0.202 | | | | |
| S5 | L3 | asphere | 10.576 | 0.346 | plastic | 1.694 | 18.403 | -66.966 |
| S6 | | asphere | 8.500 | 0.100/0.100 | | | | |
| S7 | L4 | asphere | -55.229 | 0.806 | plastic | 1.546 | 55.932 | 22.712 |
| S8 | | asphere | -17.275 | 0.100/0.578 | | | | |
| S9 | L5 | asphere | 8.707 | 0.540 | plastic | 1.569 | 37.707 | -13.971 |
| S10 | | asphere | 4.061 | 0.300 | | | | |
| S11 | L6 | asphere | 2.448 | 0.798 | plastic | 1.546 | 55.932 | 5.648 |
| S12 | | asphere | 10.493 | 1.104 | | | | |
| S13 | L7 | asphere | 13.907 | 0.551 | plastic | 1.546 | 55.932 | -5.667 |
| S14 | | asphere | 2.496 | 0.364 | | | | |
| S15 | filter IR | sphere | infinity | 0.210 | glass | 1.518 | 64.197 | |
| S16 | | sphere | infinity | 0.693 | | | | |
| IMG | imaging plane | sphere | infinity | 0.000 | | | | |

Table 5B

| | f (mm) | FNO | FOV (deg) | TTL (mm) | A (mm) |
|---|---|---|---|---|---|
| First aperture | 6.96 | 1.4 | 82.25 | 8.9 | -0.29 |
| Second aperture | 6.96 | 2.0 | 82.25 | 8.9 | 0.03 |
| Third aperture | 6.96 | 4.0 | 82.25 | 8.9 | 0.03 |

Table 5C shows the high-order coefficients that applied for the aspherical surfaces in the fifth embodiment, and the surface shape of each lens is limited by the formula mentioned in the first embodiment.

Table 5C

| Surface numeral | k | A4 | A6 | A8 | A10 |
|---|---|---|---|---|---|
| S1 | 3.7525E-03 | -1.3413E-03 | 2.9586E-03 | -3.6622E-03 | 2.6989E-03 |
| S2 | 8.8667E-01 | -1.2581E-02 | 1.9057E-03 | 5.4808E-03 | -5.8069E-03 |
| S3 | 8.0884E-01 | -2.0439E-02 | 9.0231E-03 | 1.9044E-03 | -4.4094E-03 |

(continued)

| Surface numeral | k | A4 | A6 | A8 | A10 |
|---|---|---|---|---|---|
| S4 | 5.1300E-02 | -9.4828E-03 | 3.2486E-03 | 3.7854E-03 | -4.1061E-03 |
| S5 | 2.4993E+00 | -1.6523E-02 | -7.2177E-03 | 9.2007E-03 | -7.5032E-03 |
| S6 | 2.8535E+00 | -8.9758E-03 | -1.6729E-02 | 1.7226E-02 | -1.1277E-02 |
| S7 | 9.9000E+01 | 4.6671E-02 | -1.6243E+00 | 4.9297E+00 | -8.0990E+00 |
| S8 | -3.9815E+00 | -2.6770E-01 | -1.3469E-01 | -1.2240E+00 | 2.8823E+00 |
| S9 | 2.5715E+00 | -2.9603E+00 | 2.9116E+01 | -2.5221E+02 | 1.6480E+03 |
| S10 | -4.0997E-02 | -1.5243E+01 | 1.4208E+02 | -1.1843E+03 | 7.4991E+03 |
| S11 | -2.8910E+00 | -1.1795E+01 | 1.3867E+02 | -1.2235E+03 | 7.8000E+03 |
| S12 | -1.3069E+00 | 1.0073E+00 | 3.0973E+01 | -2.4423E+02 | -1.2385E+03 |
| S13 | -5.6400E-02 | -7.4013E+01 | 7.7719E+02 | -6.4168E+03 | 3.8100E+04 |
| S14 | -7.1975E+00 | -5.1386E+01 | 6.9625E+02 | -7.3486E+03 | 5.5826E+04 |
| Surface numeral | A12 | A14 | A16 | A18 | A20 |
| S1 | -1.2362E-03 | 3.5462E-04 | -6.1996E-05 | 6.0146E-06 | -2.4786E-07 |
| S2 | 2.9365E-03 | -8.7142E-04 | 1.5329E-04 | -1.4698E-05 | 5.8764E-07 |
| S3 | 2.5766E-03 | -8.2078E-04 | 1.5228E-04 | -1.5189E-05 | 6.2165E-07 |
| S4 | 1.7199E-03 | -3.0265E-04 | -6.4243E-06 | 9.6862E-06 | -9.4560E-07 |
| S5 | 3.6499E-03 | -1.1222E-03 | 2.0489E-04 | -1.8958E-05 | 6.1165E-07 |
| S6 | 4.8459E-03 | -1.3757E-03 | 2.4456E-04 | -2.4061E-05 | 9.8266E-07 |
| S7 | 8.4896E+00 | -6.7371E+00 | 3.9999E+00 | -1.1197E+00 | 0.0000E+00 |
| S8 | 2.8864E+00 | -1.8910E+01 | 2.9872E+01 | -2.1989E+01 | 6.5551E+00 |
| S9 | -8.1636E+03 | 3.0280E+04 | -8.3685E+04 | 1.7173E+05 | -2.5966E+05 |
| S10 | -3.5666E+04 | 1.2685E+05 | -3.3673E+05 | 6.6525E+05 | -9.7023E+05 |
| S11 | -3.8379E+04 | 1.4595E+05 | -4.2308E+05 | 9.1744E+05 | -1.4589E+06 |
| S12 | 2.4778E+04 | -1.5956E+05 | 6.0568E+05 | -1.5267E+06 | 2.6577E+06 |
| S13 | -1.4283E+05 | 3.0881E+05 | -2.6016E+05 | -4.7699E+05 | 1.8689E+06 |
| S14 | -3.0092E+05 | 1.1649E+06 | -3.2814E+06 | 6.7681E+06 | -1.0191E+07 |
| Surface numeral | A22 | A24 | A26 | A28 | A30 |
| S9 | 2.8466E+05 | -2.1957E+05 | 1.1279E+05 | -3.4586E+04 | 4.7829E+03 |
| S10 | 1.0270E+06 | -7.6502E+05 | 3.7925E+05 | -1.1211E+05 | 1.4931E+04 |
| S11 | 1.6629E+06 | -1.3159E+06 | 6.8446E+05 | -2.1012E+05 | 2.8823E+04 |
| S12 | -3.2178E+06 | 2.6644E+06 | -1.4401E+06 | 4.5814E+05 | -6.5074E+04 |
| S13 | -2.9235E+06 | 2.6905E+06 | -1.5134E+06 | 4.8410E+05 | -6.7810E+04 |
| S14 | 1.1048E+07 | -8.3806E+06 | 4.2134E+06 | -1.2595E+06 | 1.6924E+05 |

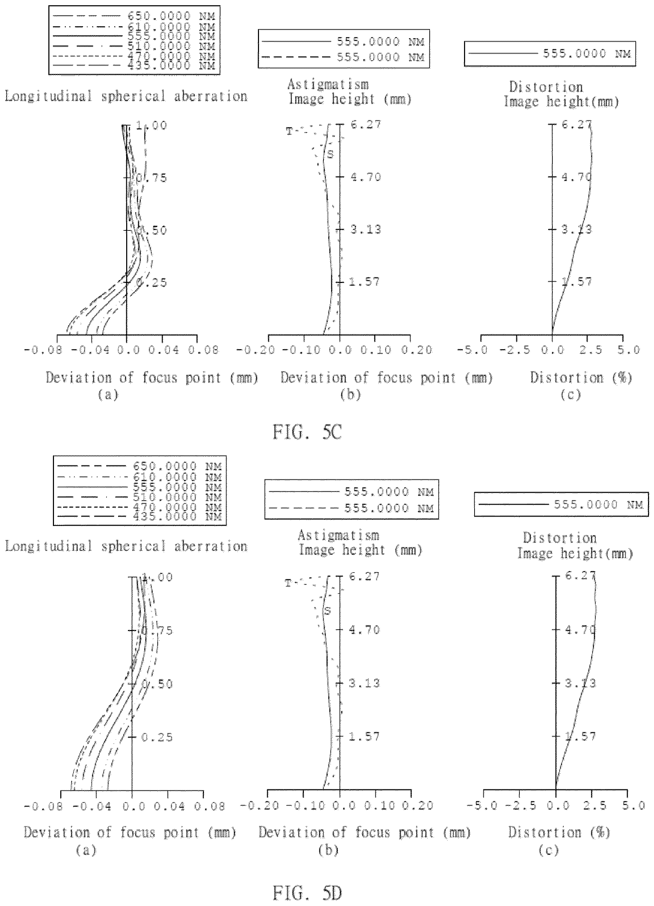

From (a), (b) and (c) of each of FIG. 5B (first aperture state), FIG. 5C (second aperture state), and FIG. 5D (third aperture state), a longitudinal spherical aberration diagram, an astigmatism diagram, and a distortion diagram of the optical system 10 in the fifth embodiment at different focal lengths are shown, respectively. The longitudinal aberration diagram represents the deviation of the focus point when the rays with different wavelengths travel through the lenses of the optical system 10. The astigmatism diagram represents the curvatures in the sagittal direction and in the tangential direction. The distortion diagram represents the magnitude of distortion corresponding to different field of views. From FIGS. 5B, 5C, and 5D, the longitudinal spherical aberration, the field curvature, and the distortion of the optical system 10 have been controlled, such that the optical system 10 of the embodiment has good imaging quality.

Table 6 shows the values of multiple relationships in the optical systems of the first to fifth embodiments.

Table 6

| Formula | First embodiment | Second embodiment | Third embodiment | Fourth embodiment | Fifth embodiment |
|---|---|---|---|---|---|
| f1/f | 1.144 | 1.156 | 1.130 | 1.276 | 1.135 |
| f2/f | -3.352 | -3.412 | -3.400 | -3.709 | -3.479 |
| f3/f | -6.143 | -5.655 | -6.214 | -7.739 | -9.622 |
| f4/f | 2.500 | 2.277 | 2.780 | 2.881 | 3.263 |
| f5/f | -2.234 | -1.958 | -2.257 | -2.081 | -2.007 |
| f6/f | 0.850 | 0.801 | 0.832 | 0.908 | 0.812 |
| f7/f | -0.816 | -0.789 | -0.817 | -0.917 | -0.814 |
| R11/f | 0.479 | 0.473 | 0.480 | 0.531 | 0.480 |
| R12/f | 1.806 | 1.680 | 1.883 | 1.943 | 1.861 |
| R21/f | 0.904 | 0.989 | 1.055 | 1.167 | 1.412 |
| R22/f | 0.640 | 0.685 | 0.718 | 0.791 | 0.880 |
| R31/f | 1.677 | 2.031 | 1.625 | 1.972 | 1.520 |
| R32/f | 1.188 | 1.324 | 1.166 | 1.426 | 1.221 |
| R41/f | 5.190 | 7.656 | 4.572 | 4.102 | 6.213 |
| R42/f | -1.835 | -1.474 | -2.250 | -2.515 | -2.482 |
| R51/f | 1.075 | 1.202 | 1.104 | 1.401 | 1.251 |
| R52/f | 0.569 | 0.566 | 0.578 | 0.627 | 0.584 |
| R61f | 0.362 | 0.358 | 0.368 | 0.399 | 0.352 |
| R62/f | 1.465 | 1.768 | 1.717 | 1.812 | 1.508 |
| R71/f | 1.861 | 6.252 | 1.833 | 2.906 | 1.998 |
| R72/f | 0.354 | 0.403 | 0.353 | 0.423 | 0.359 |
| R11/R12 | 0.265 | 0.281 | 0.255 | 0.273 | 0.258 |
| R21/R22 | 1.412 | 1.443 | 1.470 | 1.475 | 1.606 |
| R31/R32 | 1.412 | 1.535 | 1.394 | 1.384 | 1.244 |
| R41/R42 | -2.828 | -5.194 | -2.032 | -1.631 | -2.503 |
| R51/R52 | 1.889 | 2.125 | 1.910 | 2.235 | 2.144 |
| R61/R62 | 0.247 | 0.203 | 0.214 | 0.220 | 0.233 |
| R71/R72 | 5.255 | 15.523 | 5.193 | 6.875 | 5.572 |
| ImgH/f | 0.898 | 0.878 | 0.897 | 1.000 | 0.901 |
| TTL/ImgH | 1.419 | 1.451 | 1.419 | 1.451 | 1.419 |
| FOV(deg) | 82.130 | 80.908 | 82.340 | 80.879 | 82.250 |
| TTL/f | 1.275 | 1.274 | 1.273 | 1.452 | 1.279 |
| FOV/(FNOmax-FNOmin) (deg) | 31.588 | 31.118 | 31.669 | 31.107 | 31.513 |
| f123/f | 1.907 | 1.963 | 1.845 | 2.076 | 1.714 |

(continued)

| Formula | First embodiment | Second embodiment | Third embodiment | Fourth embodiment | Fifth embodiment |
|---|---|---|---|---|---|
| \|f7\|/\|SAG71\| | 5.730 | 4.549 | 5.776 | 6.340 | 5.158 |
| \|f7\|/\|SAG72\| | 6.315 | 6.301 | 6.205 | 6.896 | 5.097 |
| DL/TTL | 0.846 | 0.857 | 0.847 | 0.845 | 0.852 |
| (\|SAG71\|+\|SAG72\|)/CT7 | 3.451 | 12.576 | 3.360 | 3.177 | 4.011 |
| Yc62/SD62 | 0.645 | 0.613 | 0.603 | 0.625 | 0.608 |
| Yc72/SD72 | 0.386 | 0.391 | 0.377 | 0.378 | 0.336 |
| (R9-R10)/(R9+R10) | 0.308 | 0.360 | 0.313 | 0.382 | 0.364 |
| (AT34+CT5)/(AT45+AT56) | 0.578 | 0.588 | 0.655 | 0.720 | 1.849 |
| (CT1+CT3)/(CT4+CT5) | 1.034 | 0.925 | 1.061 | 0.965 | 1.146 |
| (CT1+CT2)/(CT3+CT4) | 1.033 | 0.936 | 1.178 | 1.044 | 1.307 |
| (AT34+AT23)/(AT45+AT56) | 0.888 | 0.885 | 0.853 | 0.968 | 0.858 |
| (CT1+CT2+CT3+CT4) /AT23 | 3.561 | 3.424 | 3.878 | 3.632 | 4.153 |
| (CT5+CT6+CT7)/AT67 | 1.652 | 1.011 | 1.942 | 1.718 | 1.711 |

According to Table 6, each of the optical systems 10 of the first to fifth embodiments satisfiesy the following relationships: 1.2<TTL/ImgH<1.55, 77deg<FOV<86 deg, 0.9<f1/f<1.5, -4.5<f2/f<-2.5, f3/f<-4, 1.5<f4/f<4, -3<f5/f<-1, 0.4<f6/f<1.2, -1.2<f7/f<-0.45, 0.3<R11/f<0.7, 1.3<R12/f<2.2, 0.5<R21/f<1.8, 0.5<R22/f<1, 1.2<R31/f<2.4, 0.9<R32/f<1.7, 2.5<R41/f, -4<R42/f<-1, 0.9<R51/f<1.6, 0.4<R52/f<0.8, 0.25<R61/f<0.5, 1<R62/f<2.2, 1.4<R71/f, 0.2<R72/f<0.6, 0<R11/R12<0.4, 1<R21/R22<2, 1<R31/R32<1.9, R41/R42<-1.4, 1.5<R51/R52<2.6, 0<R61/R62<0.35, 3<R71/R72, 0.2<|(R51-R52)/(R51+R52)|<0.5, 0.8<DL/TTL<0.9, 1.15<TTL/f<1.55, 0.8<ImgH/f<1.2, 1.4<f123/f<2.4 FOV/(FNOmax FNOmin)<35deg, 3.5<|f7/SAG71|, 3<|f7/SAG72|, 2<(ISAG711+ISAG721)/CT7<14, 0.5<Yc62/SD62<0.75, 0.25<Yc72/SD72<0.5, 0.4<(AT34+CT5)/(AT45+AT56)<2, 0.8<(CT1+CT3)/(CT4+CT5)<1.3, 0.8<(CT1+CT2)/(CT3+CT4)<1.5, 0.7<(AT34+AT23)/(AT45+AT56)<1.1, 2.5<CT1+CT2+CT3+CT4)/AT23<5, 0.8<(CT5+CT6+CT7)/AT67<2.2.

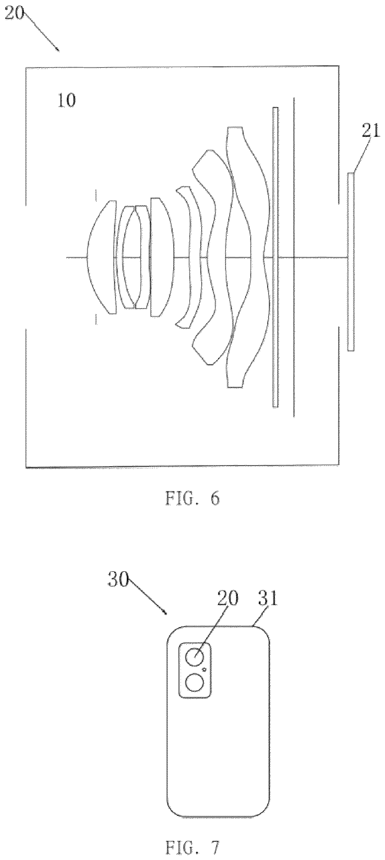

Referring to FIG. 6, the present application further provides a camera module 20, which includes an image sensor 21 and an optical system 10 of any embodiment mentioned in the first aspect. The image sensor 21 is located at the image side of the optical system 10. A photosensitive surface of the image sensor 21 is located at the imaging plane of the optical system 10. The rays travelling through the lenses and incident on the photosensitive surface may be converted into electrical signals corresponding to the images. The image sensor 21 may be a complementary metal oxide semiconductor (CMOS) or a charge coupled device (CCD). The camera module 20 may be an imaging module integrated into the electronic device 30 or an independent lens. By incorporating the optical system 10 of the present application into the camera module 20, the surface shape and refractive power of each lens of the optical system 10 are reasonably controlled, such that the camera module 20 may meet requirement of miniaturization, and may have good imaging performance and variable aperture.

Referring to FIG. 7, the present application further provides an electronic device 30, which includes a housing 31 and the camera module 20 mentioned above. The camera module 20 is located in the housing 31. The electronic device 30 includes but is not limited to a smartphone, a computer, or a smartwatch. By incorporating the camera module 20 of the present application into the electronic device 30, the electronic device 30 may meet requirement of miniaturization, and may have good imaging performance and variable aperture.

The above embodiments are only for describing but not intended to limit the present disclosure. Although the embodiments of the present disclosure have been described, those having ordinary skill in the art can understand that changes may be made within the principles of the present disclosure, up to and including the full extent established by the broad general meaning of the terms used in the claims. It will, therefore, be appreciated that the embodiments described above may be modified within the scope of the claims.

**Claims**

1. An optical system (10), **characterized in that**, the optical system (10) consists of seven lenses having refractive power, from an object side to an image side along an optical axis of the optical system (10), the seven lenses sequentially comprises:

   a first lens (L1) having positive refractive power, an object side surface (S1) of the first lens (L1) being convex near the optical axis, and an image side surface (S2) of the first lens (L1) being concave near the optical axis;
   a second lens (L2) having negative refractive power, an object side surface (S3) of the second lens (L2) being convex near the optical axis, and an image side surface (S4) of the second lens (L2) being concave near the optical axis;
   a third lens (L3) having negative refractive power, an object side surface (SS) of the third lens (L3) being convex near the optical axis, and an image side surface (S6) of the third lens (L3) being concave near the optical axis;
   a fourth lens (L4) having positive refractive power, and an image side surface (S8) of the fourth lens (L4) being convex near the optical axis;
   a fifth lens (L5) having negative refractive power, an object side surface (S9) of the fifth lens (L5) being convex near the optical axis, and an image side surface (S10) of the fifth lens (L5) being concave near the optical axis;
   a sixth lens (L6) having positive refractive power, an object side surface (S11) of the sixth lens (L6) being convex near the optical axis, and an image side surface (S12) of the sixth lens (L6) being concave near the optical axis; and
   a seventh lens (L7) having negative refractive power, an object side surface (S13) of the seventh lens (L7) being convex near the optical axis, and an image side surface (S14) of the seventh lens (L7) being concave near the optical axis;
   wherein the optical system (10) further comprises an aperture located on the object side of the first lens (L1), and a size of the aperture is variable;
   wherein the optical system (10) satisfies following relationships: 1.2<TTL/ImgH<1.55, and 77deg<FOV<86 deg;
   wherein TTL is a distance from the object side surface (S1) of the first lens (L1) to an imaging plane of the optical system (10) along the optical axis, ImgH is half of an image height corresponding to a maximum field of view of the optical system (10), and FOV is the maximum field of view of the optical system (10).

2. The optical system (10) according to claim 1, **characterized in that**, the optical system (10) further satisfies at least one of following relationships:

$$0.9<f1/f<1.5;$$

$$-4.5<f2/f<-2.5;$$

$$f3/f<-4;$$

$$1.5<f4/f<4;$$

$$-3<f5/f<-1;$$

$$0.4<f6/f<1.2;$$

and

$$-1.2<f7/f<-0.45,$$

wherein f1 is an effective focal length of the first lens (L1), f2 is an effective focal length of the second lens (L2), f3 is an effective focal length of the third lens (L3), f4 is an effective focal length of the fourth lens (L4), f5 is an effective focal length of the fifth lens (L5), f6 is an effective focal length of the sixth lens (L6), f7 is an effective focal length of the seventh lens (L7), and f is an effective focal length of the optical system (10).

3. The optical system (10) according to claim 1 or 2, **characterized in that**, the optical system (10) further satisfies at least one of following relationships:

$$0.3 < R11/f < 0.7;$$

$$1.3 < R12/f < 2.2;$$

$$0.5 < R21/f < 1.8;$$

$$0.5 < R22/f < 1;$$

$$1.2 < R31/f < 2.4;$$

$$0.9 < R32/f < 1.7;$$

$$2.5 < R41/f;$$

$$-4 < R42/f < -1;$$

$$0.9 < R51/f < 1.6;$$

$$0.4 < R52/f < 0.8;$$

$$0.25 < R61/f < 0.5;$$

$$1 < R62/f < 2.2;$$

$$1.4 < R71/f;$$

and

$$0.2 < R72/f < 0.6,$$

wherein R11 is a radius of curvature of the object side surface (S1) of the first lens (L1) at the optical axis, R12 is a radius of curvature of the image side surface (S2) of the first lens (L1) at the optical axis, R21 is a radius of curvature of the object side surface (S3) of the second lens (L2) at the optical axis, R22 is a radius of curvature of the image side surface (S4) of the second lens (L2) at the optical axis, R31 is a radius of curvature of the object side surface (SS) of the third lens (L3) at the optical axis, R32 is a radius of curvature of the image side surface (S6) of the third lens (L3) at the optical axis, R41 is a radius of curvature of an object side surface of the fourth lens (L4) at the optical axis, R42 is a radius of curvature of the image side surface (S8) of the fourth lens (L4) at the optical axis, R51 is a radius of curvature of the object side surface (S9) of the fifth lens (L5) at the optical axis, R52 is a radius of curvature of the image side surface (S10) of the fifth lens (L5) at the optical axis, R61 is a radius of curvature of the object side surface (S11) of the sixth lens (L6) at the optical axis, R62 is a radius of curvature of the image side surface (S12) of the sixth lens (L6) at the optical axis, R71 is a radius of curvature of the object side surface (S13) of the seventh lens (L7) at the optical axis, R72 is a radius of curvature of the image side surface (S14) of the seventh lens (L7) at the optical axis, and f is an effective focal length of the optical system (10).

4. The optical system (10) according to any one of claims 1 to 3, **characterized in that**, the optical system (10) further satisfies at least one of following relationships:

$$0<R11/R12<0.4;$$

$$1<R21/R22<2;$$

$$1<R31/R32<1.9;$$

$$R41/R42<-1.4;$$

$$1.5<R51/R52<2.6;$$

$$0<R61/R62<0.35;$$

$$3<R71/R72;$$

and

$$0.2<|(R51-R52)/(R51+R52)|<0.5,$$

wherein R11 is a radius of curvature of the object side surface (S1) of the first lens (L1) at the optical axis, R12 is a radius of curvature of the image side surface (S2) of the first lens (L1) at the optical axis, R21 is a radius of curvature of the object side surface (S3) of the second lens (L2) at the optical axis, R22 is a radius of curvature of the image side surface (S4) of the second lens (L2) at the optical axis, R31 is a radius of curvature of the object side surface (SS) of the third lens (L3) at the optical axis, R32 is a radius of curvature of the image side surface (S6) of the third lens (L3) at the optical axis, R41 is a radius of curvature of an object side surface of the fourth lens (L4) at the optical axis, R42 is a radius of curvature of the image side surface (S8) of the fourth lens (L4) at the optical axis, R51 is a radius of curvature of the object side surface (S9) of the fifth lens (L5) at the optical axis, R52 is a radius of curvature of the image side surface (S10) of the fifth lens (L5) at the optical axis, R61 is a radius of curvature of the object side surface (S11) of the sixth lens (L6) at the optical axis, R62 is a radius of curvature of the image side surface (S12) of the sixth lens (L6) at the optical axis, R71 is a radius of curvature of the object side surface (S13) of the seventh lens (L7) at the optical axis, and R72 is a radius of curvature of the image side surface (S14) of the seventh lens (L7) at the optical axis.

5. The optical system (10) according to any one of claims 1 to 4, **characterized in that**, the optical system (10) further satisfies following relationship:

$$0.8<DL/TTL<0.9;$$

wherein DL is a distance from the object side surface (S1) of the first lens (L1) to the image side surface (S14) of the seventh lens (L7) along the optical axis.

**6.** The optical system (10) according to any one of claims 1 to 5, **characterized in that**, the optical system (10) further satisfies following relationship:

$$1.15 < TTL/f < 1.55;$$

wherein f is an effective focal length of the optical system (10).

**7.** The optical system (10) according to any one of claims 1 to 6, **characterized in that**, the optical system (10) further satisfies following relationship:

$$0.8 < ImgH/f < 1.2;$$

wherein f is an effective focal length of the optical system (10).

**8.** The optical system (10) according to any one of claims 1 to 7, **characterized in that**, the optical system (10) further satisfies following relationship:

$$1.4 < f123/f < 2.4;$$

and wherein f is an effective focal length of the optical system (10), and f123 is a combined effective focal length of the first lens (L1), the second lens (L2), and the third lens (L3).

**9.** The optical system (10) according to any one of claims 1 to 8, **characterized in that**, the optical system (10) further satisfies following relationship:

$$FOV/(FNOmax-FNOmin) < 35deg;$$

wherein FNOmax is a maximum F-number of the optical system (10), and FNOmin is a minimum F-number of the optical system (10).

**10.** The optical system (10) according to any one of claims 1 to 9, **characterized in that**, the optical system (10) further satisfies at least one of following relationships:

$$3.5 < |f7/SAG71|;$$

$$3 < |f7/SAG72|;$$

and

$$2 < (|SAG71|+|SAG72|)/CT7 < 14,$$

wherein f7 is an effective focal length of the seventh lens (L7), SAG71 is a vector height at a maximum effective aperture of the object side surface (S13) of the seventh lens (L7), SAG72 is a vector height at a maximum effective aperture of the image side surface (S14) of the seventh lens (L7), and CT7 is a thickness of the seventh lens (L7) at the optical axis.

**11.** The optical system (10) according to any one of claims 1 to 10, **characterized in that**, the optical system (10) further satisfies following relationship:

$$0.5 < Yc62/SD62 < 0.75;$$

wherein Yc62 is a vertical height from an off-axis point of the image side surface (S12) of the sixth lens (L6) to the optical axis, and SD62 is a maximum effective aperture of the image side surface (S12) of the sixth lens (L6).

12. The optical system (10) according to any one of claims 1 to 11, **characterized in that**, the optical system (10) further satisfies following relationship:

$$0.25 < Yc72/SD72 < 0.5,$$

wherein Yc72 is a vertical height from an off-axis point of the image side surface (S14) of the seventh lens (L7) to the optical axis, and SD72 is a maximum effective aperture of the image side surface (S14) of the seventh lens (L7).

13. The optical system (10) according to any one of claims 1 to 12, **characterized in that**, the optical system (10) further satisfies at least one of following relationships:

$$0.4 < (AT34+CT5)/(AT45+AT56) < 2;$$

$$0.8 < (CT1+CT3)/(CT4+CT5) < 1.3;$$

$$0.8 < (CT1+CT2)/(CT3+CT4) < 1.5;$$

$$0.7 < (AT34+AT23)/(AT45+AT56) < 1.1;$$

$$2.5 < (CT1+CT2+CT3+CT4)/AT23 < 5;$$

and

$$0.8 < (CT5+CT6+CT7)/AT67 < 2.2,$$

wherein AT23 is a distance from the image side surface (S4) of the second lens (L2) to the object side surface (SS) of the third lens (L3) along the optical axis, AT34 is a distance from the image side surface (S6) of the third lens (L3) to an object side surface of the fourth lens (L4) along the optical axis, AT45 is a distance from the image side surface (S8) of the fourth lens (L4) to the object side surface (S9) of the fifth lens (L5) along the optical axis, AT56 is a distance from the image side surface (S10) of the fifth lens (L5) to the object side surface (S11) of the sixth lens (L6) along the optical axis, AT67 is a distance from the image side surface (S12) of the sixth lens (L6) to the object side surface (S13) of the seventh lens (L7) along the optical axis, CT1 is a thickness of the first lens (L1) at the optical axis, CT2 is a thickness of the second lens (L2) at the optical axis, CT3 is a thickness of the third lens (L3) at the optical axis, CT4 is a thickness of the fourth lens (L4) at the optical axis, CT5 is a thickness of the fifth lens (L5) at the optical axis, CT6 is a thickness of the sixth lens (L6) at the optical axis, and CT7 is a thickness of the seventh lens (L7) at the optical axis.

14. A camera module (20), **characterized in that**, the camera module (20) comprises the optical system (10) according to any one of claims 1 to 13 and an image sensor (21) located on the image side of the optical system (10).

15. An electronic device (30), **characterized in that**, the electronic device (30) comprises a housing (31) and the camera module (20) according to claim 14, and the camera module (20) is located in the housing (31).

FIG. 1A

Longitudinal spherical aberration

Astigmatism
Image height (mm)

Distortion
Image height (mm)

Deviation of focus point (mm)
(a)

Deviation of focus point (mm)
(b)

Distortion (%)
(c)

FIG. 1B

EP 4 459 355 A2

FIG. 1C

Longitudinal spherical aberration

Deviation of focus point (mm)
(a)

Astigmatism
Image height (mm)

Deviation of focus point (mm)
(b)

Distortion
Image height(mm)

Distortion (%)
(c)

FIG. 1D

FIG. 1E

| | 650.0000 NM |
| | 610.0000 NM |
| | 555.0000 NM |
| | 510.0000 NM |
| | 470.0000 NM |
| | 435.0000 NM |

Longitudinal spherical aberration

Astigmatism
Image height (mm)

| | 555.0000 NM |
| | 555.0000 NM |

Distortion
Image height(mm)

| | 555.0000 NM |

Deviation of focus point (mm)
(a)

Deviation of focus point (mm)
(b)

Distortion (%)
(c)

FIG. 1F

FIG. 2A

Longitudinal spherical aberration

Astigmatism
Image height (mm)

Distortion
Image height(mm)

Deviation of focus point (mm)
(a)

Deviation of focus point (mm)
(b)

Distortion (%)
(c)

FIG. 2B

FIG. 2C

FIG. 2D

FIG. 3A

FIG. 3B

650.0000 NM
610.0000 NM
555.0000 NM
510.0000 NM
470.0000 NM
435.0000 NM

555.0000 NM
555.0000 NM

555.0000 NM

Longitudinal spherical aberration

Astigmatism
Image height (mm)

Distortion
Image height(mm)

1.00

0.75

0.50

0.25

6.27    T

S

4.70

3.13

1.57

6.27

4.70

3.13

1.57

-0.050 -0.025 0.0 0.025 0.050

-0.2 -0.1 0.0 0.1 0.2

-5.0 -2.5 0.0 2.5 5.0

Deviation of focus point (mm)
(a)

Deviation of focus point (mm)
(b)

Distortion (%)
(c)

FIG. 3C

650.0000 NM
610.0000 NM
555.0000 NM
510.0000 NM
470.0000 NM
435.0000 NM

555.0000 NM
555.0000 NM

555.0000 NM

Longitudinal spherical aberration

Astigmatism
Image height (mm)

Distortion
Image height(mm)

1.00

0.75

0.50

0.25

6.27    T

S

4.70

3.13

1.57

6.27

4.70

3.13

1.57

-0.050 -0.025 0.0 0.025 0.050

-0.2 -0.1 0.0 0.1 0.2

-5.0 -2.5 0.0 2.5 5.0

Deviation of focus point (mm)
(a)

Deviation of focus point (mm)
(b)

Distortion (%)
(c)

FIG. 3D

FIG. 4A

Longitudinal spherical aberration

Astigmatism
Image height (mm)

Distortion
Image height(mm)

Deviation of focus point (mm)
(a)

Deviation of focus point (mm)
(b)

Distortion (%)
(c)

FIG. 4B

| | |
| --- | --- |
| ———————— 650.0000 NM | |
| —·—·—·—·—· 610.0000 NM | |
| ———————— 555.0000 NM | |
| ————— 510.0000 NM | |
| ————————— 470.0000 NM | |
| ———————— 435.0000 NM | |

Longitudinal spherical aberration

| |
| --- |
| ———————— 555.0000 NM |
| ———————— 555.0000 NM |

Astigmatism
Image height (mm)

| |
| --- |
| ———————— 555.0000 NM |

Distortion
Image height(mm)

Deviation of focus point (mm)
(a)

Deviation of focus point (mm)
(b)

Distortion (%)
(c)

FIG. 4C

| | |
| --- | --- |
| ———————— 650.0000 NM | |
| —·—·—·—·—· 610.0000 NM | |
| ———————— 555.0000 NM | |
| ————— · — 510.0000 NM | |
| ————————— 470.0000 NM | |
| ———————— 435.0000 NM | |

Longitudinal spherical aberration

| |
| --- |
| ———————— 555.0000 NM |
| ———————— 555.0000 NM |

Astigmatism
Image height (mm)

| |
| --- |
| ———————— 555.0000 NM |

Distortion
Image height(mm)

Deviation of focus point (mm)
(a)

Deviation of focus point (mm)
(b)

Distortion (%)
(c)

FIG. 4D

FIG. 5A

| | 650.0000 NM |
| | 610.0000 NM |
| | 555.0000 NM |
| | 510.0000 NM |
| | 470.0000 NM |
| | 435.0000 NM |

Longitudinal spherical aberration

| | 555.0000 NM |
| | 555.0000 NM |

Astigmatism
Image height (mm)

| | 555.0000 NM |

Distortion
Image height(mm)

Deviation of focus point (mm)
(a)

Deviation of focus point (mm)
(b)

Distortion (%)
(c)

FIG. 5B

FIG. 5C

FIG. 5D

EP 4 459 355 A2

FIG. 6

FIG. 7

40